# EUROPEAN PATENT APPLICATION

(11) **EP 4 683 385 A1**
(43) Date of publication of application: **21.01.2026**
(21) Application number: 24784107.5
(22) Date of filing: 26.03.2024
(51) Int. Cl.: H04W 36/00

(54) **COMMUNICATION METHOD AND APPARATUS**

(30) Priority: 07.04.2023 CN 202310404259
(71) Applicant: Huawei Technologies Co., Ltd., Shenzhen, Guangdong 518129 (CN)
(72) Inventor: SHA, Tong, Shenzhen, Guangdong 518129 (CN); LI, Bingzhao, Shenzhen, Guangdong 518129 (CN); XU, Bin, Shenzhen, Guangdong 518129 (CN); ZHANG, Haisen, Shenzhen, Guangdong 518129 (CN)
(74) Representative: Epping - Hermann - Fischer
(86) International application number: PCT/CN2024/083777
(87) International publication number: WO 2024/208022

(57) **Abstract**

Embodiments of this application disclose a communication method and apparatus. The method includes: when a terminal device is interested in or is receiving a broadcast service of a first frequency, receiving indication information from a network device, where the indication information indicates whether a first cell can provide a broadcast service for a first-type terminal device, a frequency of the first cell is the first frequency, and the first-type terminal device is a reduced capability terminal device; and determining, based on the indication information, whether the first frequency is a high-priority frequency for cell reselection. Embodiments of this application can ensure MBS service continuity and improve communication quality.

## Description

This application claims priority to Chinese Patent Application No. 202310404259.1, filed with the China National Intellectual Property Administration on April 7, 2023, and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A broadcast service of a new radio (new radio, NR) multicast/broadcast service (multicast/broadcast service, MBS) is a communication service mode in which a network device simultaneously provides same specific content data for all terminal devices in a geographical area. The broadcast service is sent to the terminal devices in a point to multipoint (point to multipoint, PTM) manner. A terminal device that supports NR MBS broadcast may obtain a broadcast service in a radio resource control (radio resource control, RRC) connected state, an RRC idle (RRC idle) state, or an RRC inactive (RRC inactive) state. The terminal device may receive a broadcast service in a serving cell, for example, a primary cell (primary cell, PCell) or a secondary cell (secondary cell, SCell), or may receive a broadcast service in a non-serving cell (non-serving cell).

The terminal device may perform cell reselection in an RRC idle state or an RRC inactive state, and preferentially select a frequency at which the terminal device is interested in receiving an MBS as a high-priority frequency for cell reselection. However, because a maximum bandwidth supported by a reduced capability (reduced capability, REDCAP) terminal device is limited, if an MBS receive bandwidth configured for a cell on an MBS frequency of interest is greater than a bandwidth capability of the terminal device, after preferentially selecting to camp on a target cell, the terminal device cannot receive an MBS service in the target cell, affecting MBS service reception continuity.

### SUMMARY

Embodiments of this application provide a communication method and apparatus, to ensure MBS service continuity and improve communication quality.

According to a first aspect, an embodiment of this application provides a communication method. The method is applied to a terminal device, or a chip or a circuit configured in the terminal device, and includes:
when the terminal device is interested in or is receiving a broadcast service of a first frequency, receiving indication information from a network device, where the indication information indicates whether a first cell can provide a broadcast service for a first-type terminal device, a frequency of the first cell is the first frequency, and the first-type terminal device is a reduced capability terminal device; and determining, based on the indication information, whether the first frequency is a high-priority frequency for cell reselection.

The REDCAP terminal device determines, by using the received indication information, whether the first cell can provide the broadcast service for the first-type terminal device, to determine whether to use the first frequency as the high-priority frequency for cell reselection, and preferentially reselect the first cell of the first frequency. This avoids service reception interruption caused because a broadcast service of the first cell cannot be received after the terminal device camps on the first cell, ensures broadcast service reception continuity, and improves communication quality.

In a possible design, when the first cell can provide the broadcast service for the first-type terminal device, it is determined that the first frequency is the high-priority frequency for cell reselection. When determining in advance that a bandwidth value of a CFR of the first cell meets a maximum bandwidth supported by the terminal device, the REDCAP terminal device determines the first frequency as the high-priority frequency for cell reselection, and preferentially selects the first cell of the first frequency, so that the terminal device can receive the broadcast service of the first cell after being handed over to the first cell. This ensures broadcast service reception continuity, and improves communication quality.

In another possible design, that the first cell can provide the broadcast service for the first-type terminal device includes: A bandwidth value of a first common frequency resource CFR configured in a system information block SIB20 of the first cell does not exceed a first bandwidth value; or a second CFR is configured in the first cell, where the second CFR is a CFR used by the first-type terminal device, and the second CFR and the first CFR are independent of each other.

In another possible design, when the first cell cannot provide the broadcast service for the first-type terminal device, it is determined that the first frequency is a low-priority frequency for cell reselection. When determining in advance that a bandwidth value of a CFR of the first cell does not meet a maximum bandwidth supported by the terminal device, the REDCAP terminal device determines not to use the first cell as a high-priority cell for cell reselection. This avoids service reception interruption caused because a broadcast service of the first cell cannot be received after the terminal device camps on the first cell, ensures broadcast service reception continuity, and improves communication quality.

In another possible design, the indication information is included in SIB1. SIB1 carries the indication information, so that the terminal device determines, based on the indication information, whether the first cell can provide the broadcast service for the first-type terminal device.

In another possible design, the indication information corresponds to 1-bit information, and the 1-bit information indicates whether the first cell can provide the broadcast service for the first-type terminal device.

In another possible design, the indication information corresponds to 2-bit information, 1^{st}-bit information in the 2-bit information indicates whether SIB1 includes the indication information, and 2^{nd}-bit information in the 2-bit information indicates whether the first cell can provide the broadcast service for the first-type terminal device.

According to a second aspect, an embodiment of this application provides a communication method. The method is applied to a network device, or a chip or a circuit configured in the network device, and includes:
sending indication information to a terminal device, where the indication information indicates whether a first cell can provide a broadcast service for a first-type terminal device, and the first-type terminal device is a REDCAP terminal device. The network device sends the indication information to the REDCAP terminal device, and the terminal device may determine whether the first cell can provide the broadcast service for the first-type terminal device, to determine whether to use a first frequency as a high-priority frequency for cell reselection, and preferentially reselect the first cell of the first frequency. This avoids service reception interruption caused because a broadcast service of the first cell cannot be received after the terminal device camps on the first cell, ensures broadcast service reception continuity, and improves communication quality.

In a possible design, that the first cell can provide the broadcast service for the first-type terminal device includes: A bandwidth value of a first common frequency resource CFR configured in a system information block SIB20 of the first cell does not exceed a first bandwidth value; or a second CFR is configured in the first cell, where the second CFR is a CFR used by the first-type terminal device, and the second CFR and the first CFR are independent of each other.

In another possible design, the indication information is included in SIB1. SIB1 carries the indication information, so that the terminal device determines, based on the indication information, whether the first cell can provide the broadcast service for the first-type terminal device.

In another possible design, the indication information corresponds to 1-bit information, and the 1-bit information indicates whether the first cell can provide the broadcast service for the first-type terminal device.

In another possible design, the indication information corresponds to 2-bit information, 1^{st}-bit information in the 2-bit information indicates whether SIB1 includes the indication information, and 2^{nd}-bit information in the 2-bit information indicates whether the first cell can provide the broadcast service for the first-type terminal device.

According to a third aspect, an embodiment of this application provides a communication method. The method is applied to a terminal device, or a chip or a circuit configured in the terminal device, and includes:
when the terminal device establishes a radio resource control RRC connection to a first network device or performs small data transmission SDT with the first network device, determining whether a broadcast service of interest can be received, where the broadcast service of interest is a broadcast service of a non-serving cell; and when determining that the broadcast service of interest can be received, sending first indication information to the first network device, where the first indication information indicates the broadcast service of interest.

When determining that the broadcast service of interest can be received, the terminal device sends the first indication information to the first network device. When determining that the broadcast service of interest cannot be received, the terminal device does not report the first indication information, or indicates that a first frequency in previously reported second indication information is invalid, so that the first network device is prevented from unnecessarily suppressing unicast and multicast scheduling in a serving cell due to a broadcast service, thereby ensuring communication performance of unicast and multicast in the serving cell.

In a possible design, when it is determined that the broadcast service of interest cannot be received, the first indication information is not sent. When determining that the broadcast service of interest cannot be received, the terminal device does not report the first indication information, so that the first network device is prevented from unnecessarily suppressing unicast and multicast scheduling in a serving cell due to a broadcast service, thereby ensuring communication performance of unicast and multicast in the serving cell.

In another possible design, before it is determined whether the broadcast service of interest can be received, second indication information is sent to the first network device, where the second indication information indicates a first frequency of the broadcast service of interest. The broadcast service that the terminal device is interested in is reported in a two-step reporting manner. The terminal device first reports the second indication information to indicate the first frequency of the broadcast service of interest, and then reports the first indication information after determining that the broadcast service of interest can be received.

In another possible design, third indication information is received from the first network device, where the third indication information indicates to report the first indication information. After the terminal device reports the second indication information, the first network device sends the third indication information to the terminal device, to indicate the terminal device to continue to report additional information, so as to complete information reporting.

In another possible design, when it is determined that the broadcast service of interest cannot be received, the first indication information is not sent in a first time period, where the first time period is a period of time since the third indication information is received. After sending the third indication information, the first network device starts a first timer. If the first indication information sent by the terminal device is not received before the first timer expires, the first network device considers that the terminal device does not receive a broadcast service of the non-serving cell or is not interested in receiving the broadcast service of the non-serving cell.

In another possible design, when it is determined that the broadcast service of interest cannot be received, fourth indication information is sent to the first network device, where the fourth indication information indicates that a broadcast service of the first frequency is no longer of interest or the first frequency is invalid. In a two-step reporting manner, after the second indication information is reported in a first step, if it is determined that the broadcast service of interest cannot be received, it is indicated, during second step reporting, that the broadcast service of the first frequency is no longer of interest or the first frequency is invalid.

In another possible design, the fourth indication information does not include the first frequency. It is implicitly indicated that the terminal device is no longer interested in the broadcast service of the first frequency.

In another possible design, the fourth indication information includes first signaling, and the first signaling indicates that the broadcast service of the first frequency is no longer of interest or the first frequency is invalid. Display signaling indicates that the terminal device is no longer interested in the broadcast service of the first frequency or the first frequency is invalid.

In another possible design, that the broadcast service of interest can be received includes one or more of the following cases:

A broadcast service of the non-serving cell starts to be received or is being received;
a system information block SIB1 of the non-serving cell includes scheduling information of SIB20 of the non-serving cell; or
the non-serving cell provides SIB20.

In another possible design, that the broadcast service of interest can be received includes one or more of the following cases:

Fifth indication information is received from a second network device, where the fifth indication information indicates that the non-serving cell can provide a broadcast service for a first-type terminal device;
a bandwidth value of a first common frequency resource CFR configured in a system information block SIB20 of the non-serving cell does not exceed a first bandwidth value; or
a second CFR is configured in the non-serving cell, where the second CFR is a CFR used by the first-type terminal device, and the second CFR and the first CFR are independent of each other.

The first-type terminal device is a REDCAP terminal device.

In another possible design, the first indication information includes one or more of the following: a frequency, a subcarrier spacing SCS, a bandwidth, and a modulation order of a broadcast service of the non-serving cell that the terminal device is interested in or is receiving.

According to a fourth aspect, an embodiment of this application provides a communication method. The method is applied to a network device, or a chip or a circuit configured in the network device, and includes:
receiving first indication information from a terminal device, where the first indication information indicates a broadcast service of interest that can be received by the terminal device, and the broadcast service of interest is a broadcast service of a non-serving cell.

When determining that the broadcast service of interest can be received, the terminal device sends the first indication information to a first network device. When determining that the broadcast service of interest cannot be received, the terminal device does not report the first indication information, or indicates that a first frequency in previously reported second indication information is invalid, so that the first network device is prevented from unnecessarily suppressing unicast and multicast scheduling in a serving cell due to a broadcast service, thereby ensuring communication performance of unicast and multicast in the serving cell.

In another possible design, second indication information is received from the terminal device, where the second indication information indicates a first frequency of the broadcast service of interest. The broadcast service of interest is reported in a two-step reporting manner. The terminal device first reports the second indication information to indicate the first frequency of the broadcast service of interest, and then reports the first indication information after determining that the broadcast service of interest can be received.

In another possible design, after the second indication information is received from the terminal device, third indication information is sent to the terminal device, where the third indication information indicates to report the first indication information. After the terminal device reports the second indication information, the first network device sends the third indication information to the terminal device, to indicate the terminal device to continue to report additional information, so as to complete information reporting.

In another possible design, fourth indication information is received from the terminal device, where the fourth indication information indicates that a broadcast service of the first frequency is no longer of interest or the first frequency is invalid. In a two-step reporting manner, after the second indication information is reported in a first step, if it is determined that the broadcast service of interest cannot be received, it is indicated, during second step reporting, that the broadcast service of the first frequency is no longer of interest or the first frequency is invalid.

In another possible design, the fourth indication information does not include the first frequency. It is implicitly indicated that the terminal device is no longer interested in the broadcast service of the first frequency.

In another possible design, the fourth indication information includes first signaling, and the first signaling indicates that the broadcast service of the first frequency is no longer of interest or the first frequency is invalid. Display signaling indicates that the terminal device is no longer interested in the broadcast service of the first frequency or the first frequency is invalid.

In another possible design, the first indication information includes one or more of the following: a frequency, a subcarrier spacing SCS, a bandwidth, and a modulation order of a broadcast service of the non-serving cell that the terminal device is interested in or is receiving.

According to a fifth aspect, an embodiment of this application provides a communication method. The method is applied to a terminal device, or a chip or a circuit configured in the terminal device, and includes:
receiving a first message from a network device, where the first message includes information about N multicast sessions provided by the network device, the information about the N multicast sessions includes a first identifier of each of the N multicast sessions, and N is an integer greater than 0; and receiving a paging message from the network device, where the paging message includes a second identifier of a first multicast session in the N multicast sessions, and the second identifier of the first multicast session indicates that the first multicast session is deactivated.

The second identifier is carried in the paging message, to implement notification of a deactivated state of a multicast session. Notifying a deactivated state of a multicast session may also be understood as notifying that the multicast session changes from an activated state to a deactivated state. The deactivated state may also be referred to as an inactive state or a non-active state. Compared with using an MCCH message to notify a deactivated state of a multicast session, this avoids a case in which the network device unnecessarily updates an MCCH message and the terminal device unnecessarily receives an MCCH message frequently when configuration information of a multicast session does not change, thereby reducing resource overheads and energy consumption overheads. In addition, because a quantity of bits of the second identifier is less than a quantity of bits of the first identifier, signaling overheads are reduced.

In another possible design, the second identifier of the first multicast session corresponds to a location of the first multicast session in the N multicast sessions included in the first message. In other words, the second identifier may be determined based on the location of the first multicast session in the N multicast sessions. After receiving the paging message, the terminal device may determine the location of the first multicast session in the N multicast sessions based on the second identifier of the first multicast session, and then determine the first multicast session based on the location of the first multicast session in the N multicast sessions, to determine that the first multicast session is in a deactivated state; or determine the location of the first multicast session in the N multicast sessions based on the second identifier of the first multicast session, and then determine a first identifier of the first multicast session based on the location of the first multicast session in the N multicast sessions, to determine that the first multicast session corresponding to the first identifier is in a deactivated state.

In another possible design, the information about the N multicast sessions further includes a second identifier of each multicast session, and the second identifier of each multicast session corresponds to the first identifier of each multicast session. After receiving the paging message, the terminal device searches first information for the first identifier corresponding to the second identifier based on a mapping relationship between the second identifier of each multicast session and the first identifier of each multicast session in the first information, and then determines the first multicast session based on the first identifier, to determine that the first multicast session is in a deactivated state.

In another possible design, the first message is a first message in a previous modification period or a current modification period. The terminal device may determine a deactivated state of the first multicast session based on a first message in a previous MCCH modification period or a first message in a current modification period, that is, determine a deactivated state of the first multicast session in the current MCCH modification period based on a correspondence between each multicast session and the first identifier of the multicast session in the previous MCCH modification period or the current MCCH modification period.

In another possible design, the paging message further includes indication information, and the indication information indicates that the first message is a first message in a previous modification period or a current first message modification period. The indication information carried in the paging message indicates that a deactivated state of the first multicast session in a current MCCH modification period is determined based on a correspondence between each multicast session and a first identifier of the multicast session in a previous MCCH modification period or the current MCCH modification period.

In another possible design, first information is received from the network device, where the first information indicates whether the first message is updated; and if the first information indicates that the first message is not updated, a deactivated state of the first multicast session is determined based on the second identifier of the first multicast session in the paging message; or if the first information indicates that the first message is updated, an updated first message is obtained, and a deactivated state of the first multicast session is determined based on the updated first message.

When an MCCH message does not change, a deactivated state of the first multicast session is determined with reference to the MCCH message and the paging message. When an MCCH message changes, a deactivated state of the first multicast session is determined by using an updated MCCH message. This can avoid a case in which the network device and the terminal device have different understandings of a deactivated multicast session because the location or the second identifier of the first multicast session in the first message changes because of addition or release of a multicast session. In addition, when an MCCH message is updated, for example, when a multicast session provided by a cell is added or released, the terminal device always needs to obtain an updated MCCH message, and determines a deactivated state of the first multicast session by using the updated MCCH message instead of the paging message. This can reduce resource and energy consumption overheads. In conclusion, the terminal device may flexibly determine a deactivated state of the first multicast session in different manners based on a requirement of an actual scenario.

In another possible design, it is determined, based on that the updated first message does not include configuration information of the first multicast session, that the first multicast session is in a deactivated state. The updated first message includes the first identifier of the first multicast session but does not include the configuration information of the first multicast session, or the updated first message does not include the first identifier of the deactivated first multicast session, to implicitly indicate that the first multicast session is deactivated. Alternatively, it is determined, based on that the updated first message includes the configuration information of the first multicast session, that the first multicast session is in an activated state. Alternatively, display signaling in the updated first message indicates that the first multicast session is in an activated state.

According to a sixth aspect, an embodiment of this application provides a communication method. The method is applied to a network device, or a chip or a circuit configured in the network device, and includes:
sending a first message to a terminal device, where the first message includes information about N multicast sessions provided by the network device, the information about the N multicast sessions includes a first identifier of each of the N multicast sessions, and N is an integer greater than 0; and sending a paging message to the terminal device, where the paging message includes a second identifier of a first multicast session in the N multicast sessions, and the second identifier of the first multicast session indicates that the first multicast session is deactivated.

The second identifier is carried in the paging message, to implement notification of a deactivated state of a multicast session. Notifying a deactivated state of a multicast session may also be understood as notifying that the multicast session changes from an activated state to a deactivated state. The deactivated state may also be referred to as an inactive state or a non-active state. Compared with using an MCCH message to notify a deactivated state of a multicast session, this avoids a case in which the network device unnecessarily updates an MCCH message and the terminal device unnecessarily receives an MCCH message frequently when configuration information of a multicast session does not change, thereby reducing resource overheads and energy consumption overheads. In addition, because a quantity of bits of the second identifier is less than a quantity of bits of the first identifier, signaling overheads are reduced.

In another possible design, the second identifier of the first multicast session corresponds to a location of the first multicast session in the N multicast sessions included in the first message. In other words, the second identifier may be determined based on the location of the first multicast session in the N multicast sessions. After receiving the paging message, the terminal device may determine the location of the first multicast session in the N multicast sessions based on the second identifier of the first multicast session, and then determine the first multicast session based on the location of the first multicast session in the N multicast sessions, to determine that the first multicast session is in a deactivated state; or determine the location of the first multicast session in the N multicast sessions based on the second identifier of the first multicast session, and then determine a first identifier of the first multicast session based on the location of the first multicast session in the N multicast sessions, to determine that the first multicast session corresponding to the first identifier is in a deactivated state.

In another possible design, the information about the N multicast sessions further includes a second identifier of each multicast session, and the second identifier of each multicast session corresponds to the first identifier of each multicast session. After receiving the paging message, the terminal device searches first information for the first identifier corresponding to the second identifier based on a mapping relationship between the second identifier of each multicast session and the first identifier of each multicast session in the first information, and then determines the first multicast session based on the first identifier, to determine that the first multicast session is in a deactivated state.

In another possible design, the first message is a first message in a previous modification period or a current modification period. The terminal device may determine a deactivated state of the first multicast session based on a first message in a previous MCCH modification period or a first message in a current modification period, that is, determine a deactivated state of the first multicast session in the current MCCH modification period based on a correspondence between each multicast session and the second identifier of the multicast session in the previous MCCH modification period or the current MCCH modification period.

In another possible design, the paging message further includes indication information, and the indication information indicates that the first message is a first message in a previous modification period or a current first message modification period. The indication information carried in the paging message indicates that a deactivated state of the first multicast session in a current MCCH modification period is determined based on a correspondence between each multicast session and a second identifier of the multicast session in a previous MCCH modification period or the current MCCH modification period.

In another possible design, first information is sent to the terminal device, where the first information indicates whether the first message is updated; and if the first information indicates that the first message is not updated, a deactivated state of the first multicast session is determined based on the second identifier of the first multicast session in the paging message; or if the first information indicates that the first message is updated, an updated first message is obtained, and a deactivated state of the first multicast session is determined based on the updated first message.

When configuration information of a multicast session does not change, and a deactivated or activated state of the multicast session changes, the network device only needs to send the paging message to notify the terminal device that the first multicast session is in a deactivated state, and does not need to update an MCCH message, and the terminal device does not need to re-obtain the MCCH message either. This avoids a case in which the network device frequently updates the MCCH message and the terminal device frequently obtains the MCCH message due to the deactivation or activation change of the multicast session, thereby reducing resource and energy consumption overheads. When an MCCH message changes (configuration information of a multicast session changes), a deactivated state of the first multicast session is determined by using an updated MCCH message. This can avoid a case in which the network device and the terminal device have different understandings of a deactivated multicast session because the location or the second identifier of the first multicast session in the first message changes because of addition or release of a multicast session. In addition, when an MCCH message is updated, for example, when a multicast session provided by a cell is added or released, the terminal device always needs to obtain an updated MCCH message, and determines a deactivated state of the first multicast session by using the updated MCCH message instead of the paging message. This can also reduce resource and energy consumption overheads. In conclusion, the terminal device may flexibly determine a deactivated state of the first multicast session in different manners based on a requirement of an actual scenario.

According to a seventh aspect, an embodiment of this application provides a communication apparatus, including:
a receiving module, configured to: when a terminal device is interested in or is receiving a broadcast service of a first frequency, receive indication information from a network device, where the indication information indicates whether a first cell can provide a broadcast service for a first-type terminal device, a frequency of the first cell is the first frequency, and the first-type terminal device is a REDCAP terminal device; and
a processing module, configured to determine, based on the indication information, whether the first frequency is a high-priority frequency for cell reselection.

In another possible design, the processing module is further configured to: when the first cell can provide the broadcast service for the first-type terminal device, determine that the first frequency is the high-priority frequency for cell reselection.

In another possible design, that the first cell can provide the broadcast service for the first-type terminal device includes: A bandwidth value of a first common frequency resource CFR configured in a system information block SIB20 of the first cell does not exceed a first bandwidth value; or a second CFR is configured in the first cell, where the second CFR is a CFR used by the first-type terminal device, and the second CFR and the first CFR are independent of each other.

In another possible design, the processing module is further configured to: when the first cell cannot provide the broadcast service for the first-type terminal device, determine that the first frequency is a low-priority frequency for cell reselection.

In another possible design, the indication information is included in SIB1.

In another possible design, the indication information corresponds to 1-bit information, and the 1-bit information indicates whether the first cell can provide the broadcast service for the first-type terminal device.

In another possible design, the indication information corresponds to 2-bit information, 1^{st}-bit information in the 2-bit information indicates whether SIB1 includes the indication information, and 2^{nd}-bit information in the 2-bit information indicates whether the first cell can provide the broadcast service for the first-type terminal device.

For operations performed by the communication apparatus and beneficial effect thereof, refer to the method according to the first aspect and beneficial effect thereof. Repeated parts are not described again.

According to an eighth aspect, an embodiment of this application provides a communication apparatus, including:
a sending module, configured to send indication information to a terminal device, where the indication information indicates whether a first cell can provide a broadcast service for a first-type terminal device, and the first-type terminal device is a REDCAP terminal device.

In another possible design, that the first cell can provide the broadcast service for the first-type terminal device includes: A bandwidth value of a first common frequency resource CFR configured in a system information block SIB20 of the first cell does not exceed a first bandwidth value; or a second CFR is configured in the first cell, where the second CFR is a CFR used by the first-type terminal device, and the second CFR and the first CFR are independent of each other.

In another possible design, the indication information is included in SIB1.

In another possible design, the indication information corresponds to 1-bit information, and the 1-bit information indicates whether the first cell can provide the broadcast service for the first-type terminal device.

In another possible design, the indication information corresponds to 2-bit information, 1^{st}-bit information in the 2-bit information indicates whether SIB1 includes the indication information, and 2^{nd}-bit information in the 2-bit information indicates whether the first cell can provide the broadcast service for the first-type terminal device.

For operations performed by the communication apparatus and beneficial effect thereof, refer to the method according to the second aspect and the beneficial effect thereof. Repeated parts are not described again.

According to a ninth aspect, an embodiment of this application provides a communication apparatus, including:
a processing module, configured to: when a terminal device establishes a radio resource control RRC connection to a first network device or performs small data transmission SDT with the first network device, determine whether a broadcast service of interest can be received, where the broadcast service of interest is a broadcast service of a non-serving cell; and
a sending module, configured to: when it is determined that the broadcast service of interest can be received, send first indication information to the first network device, where the first indication information indicates the broadcast service of interest.

In another possible design, the sending module is further configured to: when it is determined that the broadcast service of interest cannot be received, skip sending the first indication information.

In another possible design, the sending module is further configured to send second indication information to the first network device, where the second indication information indicates a first frequency of the broadcast service of interest.

In another possible design, the apparatus further includes:
a receiving module, configured to receive third indication information from the first network device, where the third indication information indicates to report the first indication information.

In another possible design, the sending module is further configured to: when it is determined that the broadcast service of interest cannot be received, skip sending the first indication information in a first time period, where the first time period is a period of time since the third indication information is received.

In another possible design, the sending module is further configured to: when it is determined that the broadcast service of interest cannot be received, send fourth indication information to the first network device, where the fourth indication information indicates that a broadcast service of the first frequency is no longer of interest or the first frequency is invalid.

In another possible design, the fourth indication information does not include the first frequency.

In another possible design, the fourth indication information includes first signaling, and the first signaling indicates that the broadcast service of the first frequency is no longer of interest or the first frequency is invalid.

In another possible design, that the broadcast service of interest can be received includes one or more of the following cases:

A broadcast service of the non-serving cell starts to be received or is being received;
a system information block SIB1 of the non-serving cell includes scheduling information of SIB20 of the non-serving cell; or
the non-serving cell provides SIB20.

In another possible design, that the broadcast service of interest can be received includes one or more of the following cases:

Fifth indication information is received from a second network device, where the fifth indication information indicates that the non-serving cell can provide a broadcast service for a first-type terminal device;
a bandwidth value of a first common frequency resource CFR configured in a system information block SIB20 of the non-serving cell does not exceed a first bandwidth value; or
a second CFR is configured in the non-serving cell, where the second CFR is a CFR used by the first-type terminal device, and the second CFR and the first CFR are independent of each other.

The first-type terminal device is a REDCAP terminal device.

In another possible design, the first indication information includes one or more of the following: a frequency, a subcarrier spacing SCS, a bandwidth, and a modulation order of a broadcast service of the non-serving cell that the terminal device is interested in or is receiving.

For operations performed by the communication apparatus and beneficial effect thereof, refer to the method according to the third aspect and the beneficial effect thereof. Repeated parts are not described again.

According to a tenth aspect, an embodiment of this application provides a communication apparatus, including:
a receiving module, configured to receive first indication information from a terminal device, where the first indication information indicates a broadcast service of interest that can be received by the terminal device, and the broadcast service of interest is a broadcast service of a non-serving cell.

In another possible design, the receiving module is further configured to receive second indication information from the terminal device, where the second indication information indicates a first frequency of the broadcast service of interest.

In another possible design, the apparatus further includes:
a sending module, configured to send third indication information to the terminal device, where the third indication information indicates to report the first indication information.

In another possible design, the receiving module is further configured to receive fourth indication information from the terminal device, where the fourth indication information indicates that a broadcast service of the first frequency is no longer of interest or the first frequency is invalid.

In another possible design, the fourth indication information does not include the first frequency.

In another possible design, the fourth indication information includes first signaling, and the first signaling indicates that the broadcast service of the first frequency is no longer of interest or the first frequency is invalid.

In another possible design, the first indication information includes one or more of the following: a frequency, a subcarrier spacing SCS, a bandwidth, and a modulation order of a broadcast service of the non-serving cell that the terminal device is interested in or is receiving.

For operations performed by the communication apparatus and beneficial effect thereof, refer to the method according to the fourth aspect and the beneficial effect thereof. Repeated parts are not described again.

According to an eleventh aspect, an embodiment of this application provides a communication apparatus, including:
a receiving module, configured to receive a first message from a network device, where the first message includes information about N multicast sessions provided by the network device, the information about the N multicast sessions includes a first identifier of each of the N multicast sessions, and N is an integer greater than 0.

The receiving module is further configured to receive a paging message from the network device, where the paging message includes a second identifier of a first multicast session in the N multicast sessions, and the second identifier of the first multicast session indicates that the first multicast session is deactivated.

In another possible design, the second identifier of the first multicast session corresponds to a location of the first multicast session in the N multicast sessions included in the first message.

In another possible design, the information about the N multicast sessions further includes a second identifier of each multicast session, and the second identifier of each multicast session corresponds to the first identifier of each multicast session.

In another possible design, the first message is a first message in a previous modification period or a current modification period.

In another possible design, the paging message further includes indication information, and the indication information indicates that the first message is a first message in a previous modification period or a current first message modification period.

In another possible design, the receiving module is further configured to receive first information from the network device, where the first information indicates whether the first message is updated.

A processing module is configured to: if the first information indicates that the first message is not updated, determine a deactivated state of the first multicast session based on the second identifier of the first multicast session in the paging message; or if the first information indicates that the first message is updated, obtain an updated first message, and determine a deactivated state of the first multicast session based on the updated first message.

In another possible design, the processing module is further configured to: determine, based on that the updated first message does not include configuration information of the first multicast session, that the first multicast session is in a deactivated state; or determine, based on that the updated first message includes the configuration information of the first multicast session, that the first multicast session is in an activated state.

For operations performed by the communication apparatus and beneficial effect thereof, refer to the method according to the fifth aspect and the beneficial effect thereof. Repeated parts are not described again.

According to a twelfth aspect, an embodiment of this application provides a communication apparatus, including:
a sending module, configured to send a first message to a terminal device, where the first message includes configuration information of N multicast sessions, the configuration information of each of the N multicast sessions includes a first identifier of each multicast session, and N is an integer greater than 0.

The sending module is further configured to send a paging message to the terminal device, where the paging message includes a second identifier of a first multicast session in the N multicast sessions, and the second identifier of the first multicast session indicates that the first multicast session is in a deactivated state.

In another possible design, the second identifier of the first multicast session corresponds to a location of the first multicast session in the N multicast sessions.

In another possible design, the configuration information of the N multicast sessions further includes a second identifier of each multicast session, and the second identifier of each multicast session corresponds to the first identifier of each multicast session.

In another possible design, the first message is a first message in a previous modification period or a current modification period.

In another possible design, the paging message further includes indication information, and the indication information indicates that the first message is a first message in a previous modification period or a current first message modification period.

In another possible design, the sending module is further configured to send first information to the terminal device, where the first information indicates whether to update the first message.

For operations performed by the communication apparatus and beneficial effect thereof, refer to the method according to the sixth aspect and the beneficial effect thereof. Repeated parts are not described again.

According to a thirteenth aspect, this application provides a communication apparatus. The communication apparatus includes a processor and a memory. The memory is configured to store a computer program, and the processor is configured to execute the computer program stored in the memory, to enable the communication apparatus to perform the method according to any one of the first aspect, the third aspect, and the fifth aspect.

According to a fourteenth aspect, this application provides a communication apparatus. The communication apparatus includes a processor and a memory. The memory is configured to store a computer program, and the processor is configured to execute the computer program stored in the memory, to enable the communication apparatus to perform the method according to any one of the second aspect, the fourth aspect, and the sixth aspect.

According to a fifteenth aspect, this application provides a communication apparatus. The apparatus may be a terminal device, an apparatus in the terminal device, or an apparatus that can be used in combination with the terminal device. The communication apparatus may alternatively be a chip system. The communication apparatus may perform the method according to the first aspect, the third aspect, or the fifth aspect. Functions of the communication apparatus may be implemented by hardware, or may be implemented by hardware executing corresponding software. The hardware or the software includes one or more modules corresponding to the foregoing functions. The module may be software and/or hardware. For operations performed by the communication apparatus and beneficial effect thereof, refer to the method according to the first aspect, the third aspect, or the fifth aspect and the beneficial effect thereof. Repeated parts are not described again.

According to a sixteenth aspect, this application provides a communication apparatus. The apparatus may be a network device, an apparatus in the network device, or an apparatus that can be used in combination with the network device. The communication apparatus may alternatively be a chip system. The communication apparatus may perform the method according to the second aspect, the fourth aspect, or the sixth aspect. Functions of the communication apparatus may be implemented by hardware, or may be implemented by hardware executing corresponding software. The hardware or the software includes one or more modules corresponding to the foregoing functions. The module may be software and/or hardware. For operations performed by the communication apparatus and beneficial effect thereof, refer to the method according to the second aspect, the fourth aspect, or the sixth aspect and the beneficial effect thereof. Repeated parts are not described again.

According to a seventeenth aspect, this application provides a computer-readable storage medium. The computer-readable storage medium is configured to store a computer program, and when the computer program is executed, the method according to any one of the first aspect to the sixth aspect is implemented.

According to an eighteenth aspect, this application provides a computer program product including a computer program. When the computer program is executed, the method according to any one of the first aspect to the sixth aspect is implemented.

According to a nineteenth aspect, an embodiment of this application provides a communication system. The communication system includes at least one terminal device and at least one network device. The terminal device is configured to perform the steps in the first aspect, the third aspect, or the fifth aspect, and the network device is configured to perform the steps in the second aspect, the fourth aspect, or the sixth aspect.

### BRIEF DESCRIPTION OF DRAWINGS

To describe the technical solutions in embodiments of this application or in the background more clearly, the following describes the accompanying drawings required for embodiments of this application or the background.
FIG. 1A is a diagram of an architecture of a communication system according to an embodiment of this application;
FIG. 1B is a diagram of an architecture of another communication system 100 according to an embodiment of this application;
FIG. 2 is a diagram of a band combination used for carrier aggregation;
FIG. 3 is a diagram of an MCCH message update;
FIG. 4 is a diagram of receiving a broadcast service in a non-serving cell;
FIG. 5 is a schematic flowchart of a communication method according to an embodiment of this application;
FIG. 6 is a schematic flowchart of another communication method according to an embodiment of this application;
FIG. 7 is a schematic flowchart of another communication method according to an embodiment of this application;
FIG. 8 is a diagram of multicast session deactivation according to an embodiment of this application;
FIG. 9 is a diagram of a structure of a communication apparatus according to an embodiment of this application;
FIG. 10 is a diagram of a structure of another communication apparatus according to an embodiment of this application;
FIG. 11 is a diagram of a structure of a terminal device according to an embodiment of this application;
FIG. 12 is a diagram of a structure of a network device according to an embodiment of this application;
FIG. 13 is a schematic flowchart of another communication method according to an embodiment of this application; and
FIG. 14 is a schematic flowchart of still another communication method according to an embodiment of this application.

### DESCRIPTION OF EMBODIMENTS

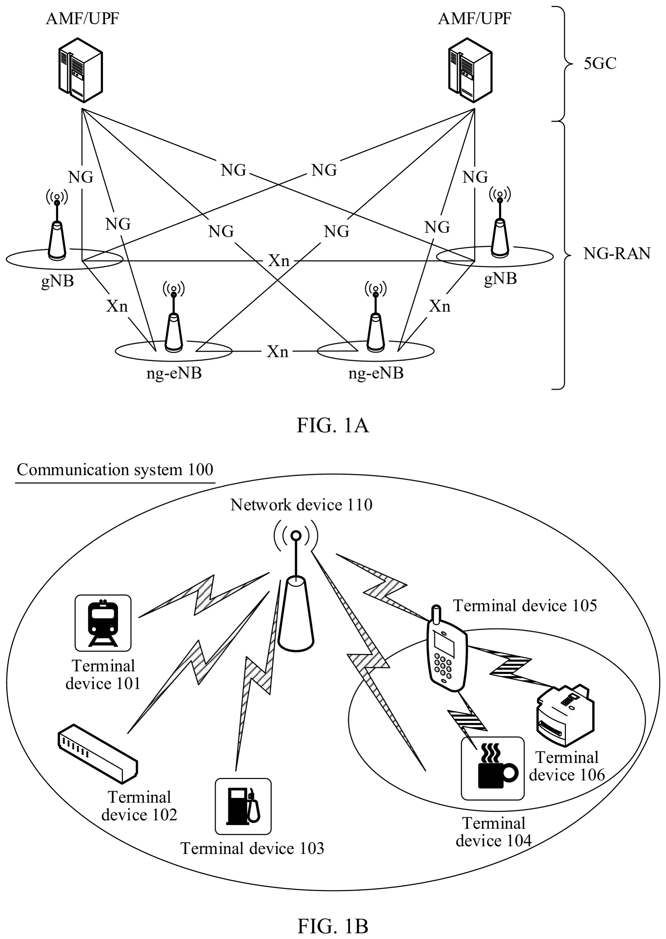

FIG. 1A is a diagram of an architecture of a communication system according to an embodiment of this application. The communication system includes two parts: a next generation radio access network (Next generation radio access network, NG-RAN) and a core network (5GC, 5th generation core network). The NG-RAN is used to implement a function related to radio access. The NG-RAN mainly includes a RAN node. The core network mainly includes an access and mobility management function (access and mobility management function, AMF) entity and a user plane function (user plane function, UPF) entity.

The RAN node is a device that provides radio access for a terminal device. The RAN node includes a 5G base station (next generation NodeB, gNB) or an LTE base station (not next generation evolved NodeB, ng-eNB). The gNB provides new radio (new radio, NR) user plane and control plane protocol terminations. The ng-eNB provides evolved UMTS terrestrial radio access network (evolved UMTS terrestrial radio access network, E-UTRAN) user plane and control plane protocol stack terminations. Connections are established between gNBs, between a gNB and a ng-eNB, and between ng-eNBs via Xn interfaces. The gNB and the ng-eNB are connected to the 5GC via next generation (next generation, NG) interfaces, specifically, connected to the AMF entity via NG-C interfaces, and connected to the UPF entity via NR-U interfaces.

The AMF entity is mainly responsible for mobility management in a mobile network, for example, user location update, registration of a user with a network, and user switching. The UPF entity is mainly responsible for processing a user packet, for example, forwarding and charging the user packet.

FIG. 1B is a diagram of an architecture of another communication system 100 according to an embodiment of this application. The communication system 100 may include a network device 110 and a terminal device 101 to a terminal device 106. It should be understood that the communication system 100 to which methods in embodiments of this application are applied may include more or fewer network devices or terminal devices. The network device or the terminal device may be hardware, or may be software obtained through function division, or may be a combination thereof. The network device and the terminal device may communicate with each other through another device or network element. In the communication system 100, the network device 110 may send downlink data to the terminal device 101 to the terminal device 106. Certainly, the terminal device 101 to the terminal device 106 may also send uplink data to the network device 110. The terminal device 101 to the terminal device 106 may be user equipment (user equipment, UE), cellular phones, smartphones, portable computers, handheld communication devices, handheld computing devices, satellite radio apparatuses, global positioning systems, palmtop computers (personal digital assistant, PDA), and/or any other appropriate devices configured to perform communication in the wireless communication system 100. Certainly, the terminal device in this application may include high-power UE (for example, UE that supports a maximum transmit power of 26 dBm, 29 dBm, or higher). The network device 110 may be an LTE and/or NR network device, and may be specifically a base station (NodeB), an evolved NodeB (eNodeB), a base station in a 5G mobile communication system, a next generation mobile communication base station (Next generation NodeB, gNB), a base station in a future mobile communication system, or an access node in a Wi-Fi system.

The communication system 100 may use a public land mobile network (public land mobile network, PLMN), a device-to-device (device-to-device, D2D) network, a machine to machine (machine to machine, M2M) network, an internet of things (internet of things, IoT), or another network. In addition, the terminal device 104 to the terminal device 106 may also form a communication system. In this communication system, the terminal device 105 may send downlink data to the terminal device 104 or the terminal device 106. The methods in embodiments of this application may be applied to the communication system shown in FIG. 1A or FIG. 1B.

The following describes related technologies in this application.

### Carrier aggregation:

Carrier aggregation means that a plurality of carriers simultaneously serve a terminal device, and each carrier may have at least one serving cell working for the terminal device. In existing carrier aggregation, generally, a carrier has one serving cell as a primary cell and other serving cells as secondary cells. When carrier aggregation is overloaded, a secondary cell may be activated/deactivated. If there is no data transmission for a period of time, a network device may deactivate the secondary cell, and may consider reactivating the secondary cell when there is data to be sent subsequently.

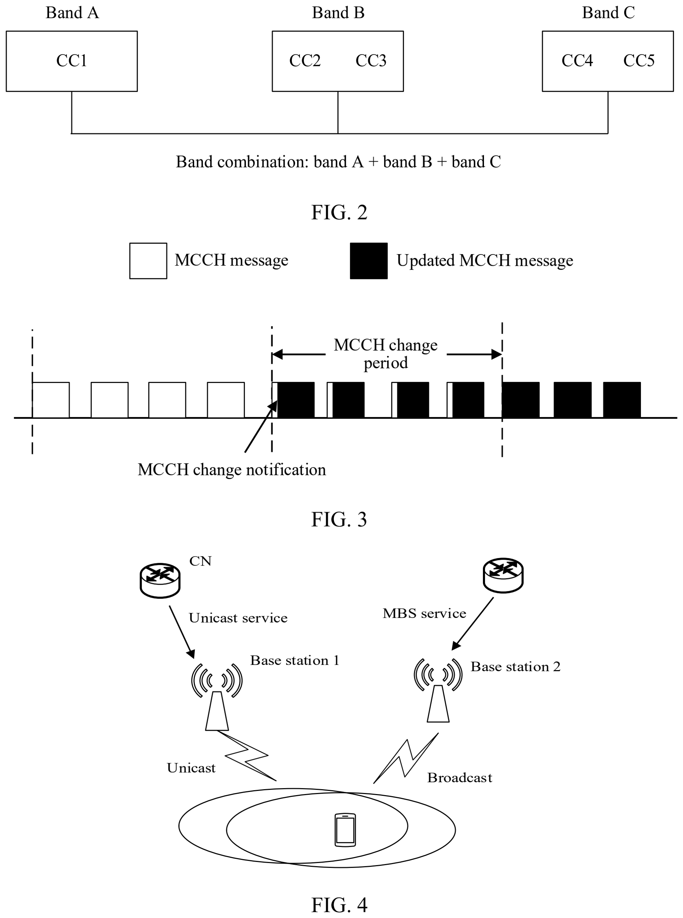

Carrier aggregation includes aggregation of a plurality of carriers in a single band, and also includes aggregation of a plurality of carriers in a plurality of bands. FIG. 2 is a diagram of a band combination (band combination, BC) used for carrier aggregation. A band A includes only one carrier, a band B and a band C include a plurality of carriers, and the band A, the band B, and the band C may form a band combination.

### MBS broadcast:

A two-step configuration manner is used for NR MBS broadcast. First, a network device broadcasts a system information block (system information block, SIB) 20. SIB20 carries an MCCH configuration used for MBS broadcast. The MCCH configuration includes an MCCH repetition period and offset, MCCH window duration, an MCCH window start slot, an MCCH modification period, and the like, and further includes a common frequency resource (common frequency resource, CFR) configuration. A CFR is a frequency domain resource used for receiving a broadcast service, and a CFR bandwidth may be equal to a bandwidth of CORESET#0 or an initial bandwidth part (initial bandwidth part, initial BWP) configured by SIB1, or may be greater than a bandwidth of an initial BWP.

Then, the network device sends an MBS control channel (MBS control channel, MCCH) message. The MCCH message carries MBS broadcast configuration information, and the configuration information includes a list of MBS broadcast sessions being provided by a cell. For each MBS broadcast session, a broadcast session ID (for example, a temporary mobile group identity (temporary mobile group identity, TMGI)) and a group radio network temporary identifier (group radio network temporary identifier G-RNTI) are provided. Optionally, a broadcast MBS radio bearer (MBS radio bearer, MRB) configuration, a discontinuous reception (discontinuous reception, DRX) configuration of an MBS traffic channel (MBS traffic channel, MTCH), and a neighbor cell list of the broadcast session are provided.

When a terminal device is interested in receiving an MBS broadcast service, the terminal device performs an MCCH information obtaining process. Specifically, the terminal device interested in receiving an MBS broadcast service needs to perform the MCCH information obtaining process when entering a cell that provides SIB20 (for example, when the terminal device is powered on or after the UE moves to the cell) or after receiving an MCCH change notification (MCCH change notification). The MCCH change notification is sent because a new MBS service starts.

FIG. 3 is a diagram of an MCCH message update. MBS broadcast supports an MCCH change notification, and the MCCH change notification is used to notify a terminal device of a start of a broadcast session or an MCCH information change of an ongoing broadcast session (including an MBS session stop). The MCCH change notification is indicated by downlink control information (downlink control information, DCI) carried in a physical downlink control channel (physical downlink control channel, PDCCH). The DCI includes 2-bit information, where 1-bit information indicates a broadcast session start, and the other 1-bit information indicates an MCCH information change. In one MCCH modification period, a same MCCH is repeatedly transmitted several times based on a scheduled repetition period. Generally, an MCCH modification period is greater than or equal to an MCCH repetition period. After receiving an MCCH change notification, a terminal device that is receiving or is interested in receiving an MBS broadcast service re-obtains an updated MCCH message. Before the terminal device obtains the updated MCCH message, the terminal device uses a previously obtained MCCH message.

### Cell reselection:

A terminal device may perform cell reselection in an RRC idle state or an RRC inactive state. The terminal device in an RRC idle state or an RRC inactive state may measure signal quality of a serving cell and signal quality of a neighboring cell; and if the signal quality of the serving cell is poorer than the signal quality of the neighboring cell, the terminal actively reselects a cell with a higher priority or better signal quality as a serving cell. This process is referred to as cell reselection. The cell reselection procedure includes three phases: starting neighboring cell measurement (determining, based on a measurement start condition, whether to start neighboring cell measurement), determining reselection evaluation (determining whether signal quality of a neighboring cell meets a cell reselection criterion, and performing cell reselection if yes, or camping on a current cell if not), and performing cell reselection (receiving a system message of a target cell, and camping on a new cell if the target cell has no access restriction).
(1) Start neighboring cell measurement: If a priority of a neighboring cell is higher than a priority of a serving cell, neighboring cell measurement is started unconditionally; or if a priority of a neighboring cell is lower than or equal to a priority of a serving cell, signal quality of the serving cell is compared with a threshold delivered by a network device, and neighboring cell measurement is started only when the signal quality of the serving cell is lower than or equal to the threshold. This saves power of the terminal device.
(2) Determine reselection evaluation: For a high-priority neighboring cell, cell reselection is performed when signal quality of the neighboring cell is greater than a high-priority reselection threshold configured by the network device in a specific duration interval and the terminal device camps on a current serving cell for more than 1s. An R criterion is used for sorting neighboring cells of a same priority. To be specific, cell signal quality levels of each neighboring cell and the current serving cell that meet a cell selection standard are calculated. Then, sorting is performed based on the cell signal quality levels, a cell with a highest cell signal quality level is selected or a cell with a signal quality level close to a highest cell signal quality level within a specific range is selected under a multi-beam operation, and a cell with a largest quantity of beams whose beam signal quality meets a requirement is selected from these cells as a best cell. If the best cell continuously meets the cell reselection criterion in a specific duration interval, and the terminal device camps on the current serving cell for more than 1s, the terminal device starts cell reselection to the neighboring cell. For a low-priority cell, the terminal device reselects the low-priority cell only when no cell in high-priority cells or same-priority cells meets the cell reselection criterion, signal quality of the serving cell is lower than a threshold in a specific duration interval, signal quality of the low-priority cell is higher than a threshold, and the terminal device camps on the current serving cell for more than 1s.
(3) Perform cell reselection: After neighboring cell measurement is completed and it is determined that there is a new cell that meets the cell reselection criterion, the terminal device attempts to camp on a target cell, receives a system message of the target cell, and may camp on the target cell after determining that the system message indicates that the target cell is allowed to be camped on; otherwise, the terminal device cannot camp on the target cell.

For the terminal device in an RRC idle state or an RRC inactive state, to ensure MBS broadcast service continuity in a moving process of the terminal device, a base station sends SIB21 to the terminal device, and provides a mapping relationship between a frequency and an MBS service by using SIB21. SIB21 carries MBS frequency selection area identities (MBS frequency selection area identity, MBS FSAI) of a current frequency and a neighboring frequency. The MBS FSAI identifies an area in which an MBS broadcast service is provided, for example, a group of cells. The terminal device may obtain a user service description (user service description, USD) from an application layer or a service layer of the terminal device. The USD includes an identifier (for example, a TMGI), a frequency, and one or more MBS FSAIs of an MBS broadcast session that the terminal device is interested in. For a broadcast session or a broadcast service, if the terminal device determines that the MBS FSAIs in SIB21 include an MBS FSAI that is in the USD and that the terminal device is interested in, the terminal device considers that a corresponding frequency in SIB21 can provide the broadcast service that the terminal device is interested in. During cell reselection, if the terminal device is interested in receiving or is receiving broadcast, and can receive an MBS broadcast service only after camping on a specific frequency (assuming a frequency A), the terminal device considers the frequency (the frequency A) as a high-priority frequency for cell reselection when the following two conditions are met:
(1) SIB1 of a target cell of the frequency A includes scheduling information of SIB20, that is, the target cell can provide SIB20.
(2) The serving cell broadcasts SIB21, SIB21 includes the frequency A, and an MBS FSAI corresponding to the frequency A is the same as an MBS FSAI that is included in the USD and that the terminal device is interested in; or the serving cell does not broadcast SIB21, and the USD indicates that the terminal device is interested in a broadcast service of the frequency A; or the USD indicates that the terminal device is interested in the frequency A, and the serving cell also broadcasts SIB21, but SIB21 does not provide an FSAI mapping relationship corresponding to a broadcast service of the frequency A.

### MBS interest indication (MBS interest indication, MII) reporting:

In an RRC connected state, a terminal device receiving a broadcast service may report an MII to a base station. The MII indicates that the terminal device is interested in receiving broadcast information, for example, broadcast frequency information (for example, an absolute radio frequency channel number (absolute radio frequency channel number, ARFCN)), a broadcast session identifier (TMGI, temporary mobile group identity), and a priority of broadcast compared with unicast. The base station learns, by using the MII, that a single device is receiving or is interested in receiving broadcast, and then performs proper scheduling based on a capability of the terminal device, to ensure that both broadcast and unicast that are simultaneously scheduled do not exceed the capability of the terminal device.

For a terminal device that can receive a broadcast service of interest in a serving cell, a primary cell (primary cell, PCell) broadcasts SIB21 (the PCell supports MBS broadcast), a broadcast service that the terminal device is interested in is being performed or is about to start, a frequency of the broadcast service of interest meets a band combination capability of the terminal device, and the terminal device triggers MII reporting when any one of the following three conditions is met: (1) The terminal device has not sent an MII since entering an RRC connected state. (2) MII content that has been sent by the terminal device changes. (3) After sending an MII last time, the terminal device is connected to a primary cell that does not support SIB21.

FIG. 4 is a diagram of receiving a broadcast service of a non-serving cell (non-serving cell). A terminal device may receive an MBS broadcast service from the non-serving cell. To reduce costs, in one manner, unicast and broadcast share a hardware resource, and hardware resources occupied by broadcast and unicast are dynamically shared. For example, when the terminal device does not receive a broadcast service, all resources may be used for unicast receiving; or when the terminal device receives a broadcast service, some capabilities are used for broadcast receiving, and some capabilities are used for unicast receiving. The foregoing broadcast service from the non-serving cell and a unicast service from a serving cell may belong to a same public land mobile network (public land mobile network, PLMN) (understood as a same operator), or may belong to different PLMNs (understood as different operators).

In the foregoing manner in which broadcast and unicast share a resource, to enable a serving base station (a base station corresponding to a serving cell on which the terminal device camps, that is, a base station that provides a unicast service for the terminal device) to learn of a capability occupied by the terminal device to receive broadcast in the non-serving cell, the terminal device is allowed to report an MII used for the non-serving cell. The serving base station indicates, in SIB1, whether to allow the terminal device to report the MII used for the non-serving cell. If the serving base station allows the terminal device to report the MII, and the terminal device is receiving or is interested in receiving a broadcast service in the non-serving cell, the terminal device may report the MII used for the non-serving cell to the serving base station when a specific trigger condition is met. The serving base station determines, based on the MII, a capability of the terminal device that is occupied by the non-serving cell for broadcast, to obtain a capability of the terminal device that can be used for unicast. A network device may reduce or suppress unicast scheduling, to ensure that the terminal device can simultaneously obtain both the unicast service and the broadcast service. The MII may include one or more of frequency information, a subcarrier spacing (sub-carrier space, SCS), and a bandwidth of receiving the broadcast service in the non-serving cell by the terminal device. The frequency of the broadcast service is determined by the terminal device based on SIB21 of the serving cell, or is determined by the terminal device based on a frequency indicated in a USD. The SCS, the bandwidth, and other information of the broadcast service are determined based on system information of the non-serving cell, and the system information may include SIB1 and/or SIB20.

### MBS multicast:

In Rel-17, NR MBS multicast supports only transmission in an RRC connected state. MBS multicast can use point to point (point to point, PTP) or point to multipoint (point to multipoint, PTM) transmission. Conventional multicast service scenarios include public security and mission critical (mission critical), internet protocol television (internet protocol television, IPTV), and live video scenarios. A terminal device that receives multicast can accept an MBS multicast service or an MBS session (MBS session) only after performing an authentication procedure with a core network. Each MBS session is identified by a TMGI. On an air interface, the terminal device receives, by using dedicated signaling (for example, an RRC reconfiguration message), a connected-state multicast configuration delivered by a base station. The multicast configuration includes a multicast radio bearer (MBS radio bearer, MRB) configuration. When (temporarily) no data used for a multicast session needs to be sent to the terminal device, the base station may move the terminal device to an RRC idle state or an RRC inactive state. When the multicast session is activated by the CN or the base station has multicast session data to be transmitted, the base station supporting MBS notifies, by using a group notification (group notification) mechanism, the terminal device in an RRC idle state or an RRC inactive state that the multicast session data needs to be delivered. The group notification is sent to the terminal device by using a paging message (also referred to as group paging). The paging message includes an MBS session identifier (for example, a TMGI), and the paging message is used to page all terminal devices in an RRC idle state or an RRC inactive state that join an associated MBS multicast session. After receiving the paging message, the terminal device determines that the paging message includes a TMGI of a multicast session that the terminal device has joined. In this case, the terminal device triggers RRC connection establishment or RRC connection resume.

However, when there are too many multicast users in a cell, a quantity of connected-state users who can be accommodated in the cell may be exceeded. Therefore, to alleviate network congestion, the terminal device can receive multicast in an RRC non-connected state (an RRC inactive state or an RRC idle state). When the terminal device has no unicast service but only a multicast service, the network device may release the terminal device to an RRC inactive state to receive multicast. This not only helps alleviate network congestion, but also helps save energy of the terminal device. A multicast configuration in an RRC non-connected state may be sent to the terminal device by using RRC dedicated signaling, for example, an RRC release (RRC Release) message. After the network device indicates the terminal device to enter an RRC non-connected state (for example, an RRC inactive state) to receive a multicast configuration (for example, by using an RRC release message including suspendConfig), the terminal device receives the multicast configuration in an inactive state in the serving cell by using a stored multicast configuration used for the inactive state. The multicast configuration in a non-connected state may alternatively be sent to the terminal device by using common signaling, for example, sent to the terminal device by using an MCCH message. When a multicast configuration of a cell changes/is updated, or the terminal device moves to another cell through cell reselection, the terminal device may not need to enter an RRC connected state, and may obtain, from an MCCH message sent by a target cell through broadcasting, a multicast configuration used by the cell for the RRC non-connected state, so that the terminal device can keep in an RRC non-connected state to continue to receive a multicast service. Similar to the MCCH message, a multicast MCCH message carries a multicast session list provided by a cell, and the multicast session list includes one or more multicast sessions. For each multicast session, the MCCH message indicates an identifier (for example, a TMGI) of the multicast session and a corresponding multicast session configuration, for example, a multicast MRB configuration and a multicast traffic channel configuration.

For the terminal device in an RRC non-connected state, when a multicast session is in a deactivated state, the network device needs to notify the terminal device, so that the terminal device stops receiving the multicast session. In a manner, the network device sends a paging message to the terminal device, and indicates a deactivated state of a multicast session by using the paging message. The paging message includes an identifier (for example, a TMGI) of the deactivated multicast session. For example, a list of deactivated multicast sessions indicates TMGIs of one or more multicast sessions. In another manner, an MCCH message is sent to the terminal device, and the MCCH message indicates a deactivated state of a multicast session. For example, the network device indicates an MCCH update to the terminal device, and indicates the terminal device to obtain an updated MCCH message. The updated MCCH message implicitly notifies, by not including an identifier TMGI of a deactivated multicast session, the terminal device that the multicast session is in a deactivated state, or implicitly indicates a deactivated state of a multicast session by including a multicast session identifier TMGI but not including a configuration corresponding to the multicast session.

### Reduced capability (reduced capability, REDCAP):

A large-scale industrial wireless sensor (such as a pressure sensor or a humidity sensor), a monitoring camera, a wearable device (such as a smartwatch or an electronic health-related device), a medical monitoring device used for a public safety application, and the like are required to be characterized by low complexity, a small size, and/or a long battery life. This REDCAP terminal device has a lower hardware capability, for example, supports a lower maximum bandwidth, fewer receive branches (Rx branch), a lower-order multiple input multiple output (multiple input multiple output, MIMO), and a lower modulation order. The REDCAP terminal device does not support carrier aggregation or dual connectivity (dual connectivity, DC), and the maximum bandwidth supported by the REDCAP terminal device is limited, for example, 20 MHz or 5 MHz. If a dedicated bandwidth part (bandwidth part, BWP) configured for a cell exceeds the maximum bandwidth supported by the REDCAP terminal device, the REDCAP terminal device cannot perform data transmission on the dedicated BWP.

To enable the REDCAP terminal device to receive MBS broadcast, in one manner, it is required that a CFR configured by a network device does not exceed the maximum bandwidth supported by the REDCAP terminal device. However, this limits a size of a broadcast CFR configured on a network, a CFR bandwidth that can be used by a non-REDCAP terminal device to receive broadcast is also limited, and a capacity and a peak rate of a broadcast service are reduced accordingly. In another manner, a network device separately configures a CFR of the REDCAP terminal device that is independent of a CFR of a non-REDCAP terminal device, and the network device may configure a relatively small CFR for the REDCAP terminal device, to ensure that the CFR does not exceed the maximum bandwidth supported by the REDCAP terminal device.

The foregoing solutions related to an MBS service have the following problems:
(1) The terminal device may perform cell reselection in an RRC idle state or an RRC inactive state, and preferentially select a frequency at which the terminal device is interested in receiving an MBS as a high-priority frequency for cell reselection. However, because a maximum bandwidth supported by a reduced capability (reduced capability, REDCAP) terminal device is limited, if an MBS receive bandwidth configured for a cell on an MBS frequency of interest is greater than a bandwidth capability of the terminal device, after preferentially selecting to camp on a target cell, the terminal device cannot receive an MBS service in the target cell, affecting MBS service reception continuity.
(2) If the terminal device cannot receive an MBS broadcast service in a non-serving cell, but the terminal device sends an MII to the network device after a current MII trigger condition is met, and indicates, by using the MII, that the terminal device is interested in receiving a broadcast service in the non-serving cell, the network device unnecessarily suppresses unicast and multicast scheduling, affecting unicast and multicast performance. In this case, the terminal device still cannot receive the broadcast service of the non-serving cell.
(3) A paging message is used to carry an identifier TMGI of a deactivated multicast session. A size of one TMGI is a hexadecimal number of 11 or 12 bits, each hexadecimal number is expressed by using a 4-bit binary number, and a total of 44 or 48 binary bits are required to express the one multicast session TMGI. Consequently, paging message signaling overheads are large. Alternatively, when an activated state or a deactivated state of a multicast session changes, the network device needs to indicate to update an MCCH message, and the terminal device needs to frequently obtain an updated MCCH message, causing power consumption overheads of the terminal device, and also increasing load on a network side. For example, when a configuration of a multicast session does not change, but only an activated state or a deactivated state of the multicast session changes, the network device also needs to accordingly add or delete a corresponding multicast session in an MCCH message, and the terminal device also needs to read the MCCH information again to obtain the configuration of the multicast session. However, configuration information of the multicast session actually does not change.

To resolve the foregoing technical problems, embodiments of this application provide the following solutions.

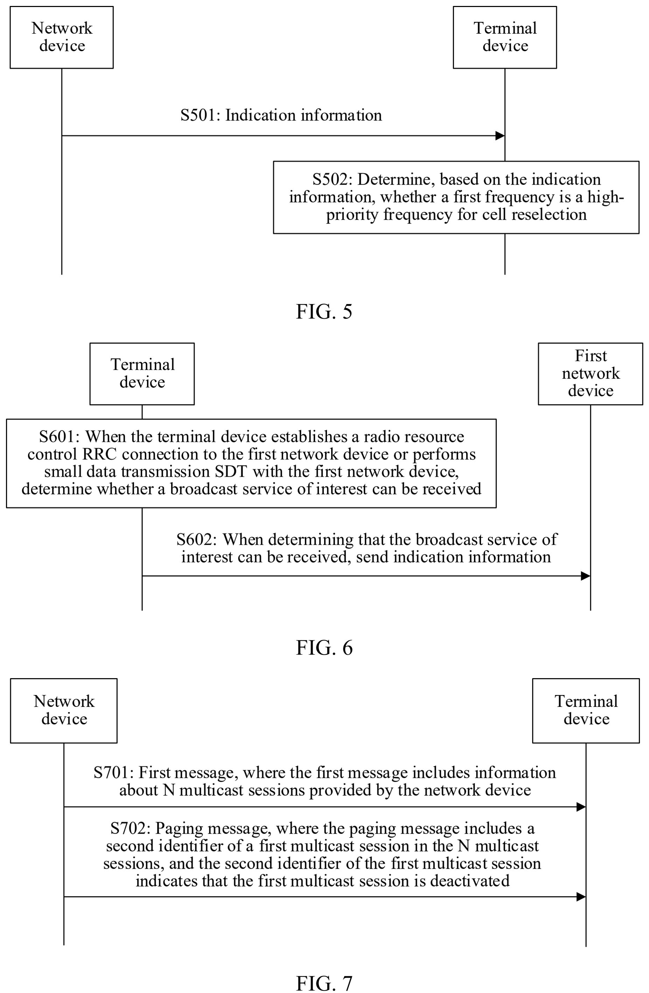

FIG. 5 is a schematic flowchart of a communication method according to an embodiment of this application. The method mainly includes the following steps.

S501: When a terminal device is interested in or is receiving a broadcast service of a first frequency, receive indication information from a network device, where the indication information indicates whether a first cell can provide a broadcast service for a first-type terminal device, a frequency of the first cell is the first frequency, and the first-type terminal device is a REDCAP terminal device.

The first cell may be a cell to which the network device belongs, or may be a reselected target cell. The broadcast service may be an MBS broadcast service. The broadcast service may also be replaced with an MBS multicast service.

The network device may be a base station of the first cell. The terminal device is a REDCAP terminal device. A current serving cell of the terminal device may be a second cell. The second cell is different from the first cell.

S501 may alternatively be replaced with the following: When a first condition is met, the terminal device determines that the first frequency is a high-priority frequency for cell reselection. The first condition includes: The terminal device is interested in or is receiving the broadcast service of the first frequency, the first cell reselected by the terminal device can provide the broadcast service for the first-type terminal device, and the frequency of the first cell is the first frequency.

Specifically, if the first cell can provide the broadcast service for the first-type terminal device, the indication information indicates that the first cell can provide the broadcast service for the first-type terminal device; or if the first cell cannot provide the broadcast service for the first-type terminal device, the indication information indicates that the first cell cannot provide the broadcast service for the first-type terminal device.

That the first cell can provide the broadcast service for the first-type terminal device includes: A bandwidth value of a first common frequency resource CFR configured in SIB20 of the first cell does not exceed a first bandwidth value. The first bandwidth value may be a maximum bandwidth supported by the terminal device. If the first CFR configured in SIB20 is a default, the bandwidth value of the first CFR is equal to a bandwidth of a control resource set 0 (CORESET#0), and CORESET#0 is configured by using SIB1. Alternatively, a second CFR is configured in the first cell, the second CFR is a CFR used by the first-type terminal device, and the second CFR and the first CFR are independent of each other. A bandwidth value of the second CFR does not exceed a maximum bandwidth supported by the first-type terminal device, and the second CFR may be configured in an additional field in SIB20, or may be configured in another SIB. The second CFR may be a dedicated CFR configured by the network device for the REDCAP terminal device, and the bandwidth of the second CFR is less than or equal to a maximum channel bandwidth supported by the REDCAP terminal device.

That the first cell cannot provide the broadcast service for the first-type terminal device includes: The bandwidth value of the first common frequency resource CFR configured in SIB20 of the first cell exceeds the first bandwidth value.

Optionally, the indication information may indicate whether the bandwidth value of the first common frequency resource CFR configured in SIB20 of the first cell exceeds the first bandwidth value; or the indication information may indicate whether the second CFR is configured in the first cell, and the second CFR and the first CFR are independent of each other. The terminal device may determine, by using the indication information, whether the first cell can provide the broadcast service for the first-type terminal device.

The indication information may be included in SIB1, or may be included in another system information block. The indication information corresponds to 1-bit information, and the 1-bit information indicates whether the first cell can provide the broadcast service for the first-type terminal device. Alternatively, the indication information corresponds to 2-bit information, 1^{st}-bit information in the 2-bit information indicates whether SIB1 includes the indication information, and 2^{nd}-bit information in the 2-bit information indicates whether the first cell can provide the broadcast service for the first-type terminal device. If SIB1 does not include the indication information, the terminal device cannot determine whether the first cell can provide the broadcast service for the first-type terminal device, that is, cannot determine whether the first frequency is the high-priority frequency for cell reselection.

S502: The terminal device determines, based on the indication information, whether the first frequency is the high-priority frequency for cell reselection.

Specifically, when the first cell can provide the broadcast service for the first-type terminal device, it is determined that the first frequency is the high-priority frequency for cell reselection. It may also be understood that, when the first cell can provide the broadcast service for the first-type terminal device, it is determined that the first frequency is the high-priority frequency for cell reselection. Alternatively, when the first cell cannot provide the broadcast service for the first-type terminal device, it is determined that the first frequency is a low-priority frequency for cell reselection. Alternatively, when the first cell cannot provide the broadcast service for the first-type terminal device, it is determined that the first frequency is still the high-priority frequency for cell reselection, but the first cell is a low-priority cell. It may also be understood that, when the first cell cannot provide the broadcast service for the first-type terminal device, the terminal device may still use the first frequency as the high-priority frequency, and determine whether a cell other than the first cell of the first frequency can provide the broadcast service for the first-type terminal device.

It should be noted that, on a premise that the terminal device is interested in or is receiving the broadcast service of the first frequency, the terminal device needs to determine, based on the indication information, whether the first frequency is the high-priority frequency for cell reselection. In a possible manner, if a terminal device having an MBS broadcast capability is receiving or is interested in receiving an MBS broadcast service, and can receive the MBS broadcast service only by camping on the first frequency that provides the MBS broadcast service, the terminal device may consider that the first frequency is a highest-priority frequency during a specified MBS broadcast session. The terminal device determines, in the following manners, the broadcast service of the first frequency that the terminal device is interested in receiving or is receiving:

A serving cell broadcasts SIB21, SIB21 includes the first frequency, and an MBS FSAI corresponding to the first frequency is the same as an MBS FSAI that is included in a USD and that the terminal device is interested in; or a serving cell does not broadcast SIB21, and a USD indicates that the terminal device is interested in the broadcast service of the first frequency; or a USD indicates that the terminal device is interested in the first frequency, and a serving cell also broadcasts SIB21, but SIB21 does not provide an FSAI mapping relationship corresponding to the broadcast service of the first frequency.

The MBS FSAI included in SIB21 identifies an area in which an MBS broadcast service is provided. The USD may be obtained by the terminal device from an application layer or a service layer. The USD includes an identifier (TMGI) of an MBS broadcast session of interest, and further includes at least one of a frequency corresponding to the MBS broadcast session and one or more MBS FSAIs.

In this embodiment of this application, the REDCAP terminal device determines, by using the received indication information, whether the first cell can provide the broadcast service for the first-type terminal device, so that the REDCAP terminal device determines in advance whether a bandwidth value of a CFR of the first cell meets the maximum bandwidth supported by the terminal device, to determine whether to use the first frequency as the high-priority frequency for cell reselection, and preferentially reselect the first cell of the first frequency. This avoids service reception interruption caused because a broadcast service of the first cell cannot be received after the terminal device camps on the first cell, ensures broadcast service reception continuity, and improves communication quality.

FIG. 6 is a schematic flowchart of another communication method according to an embodiment of this application. The method mainly includes the following steps.

S601: When a terminal device establishes a radio resource control RRC connection to a first network device or performs small data transmission (small data transmission, SDT) with the first network device, the terminal device determines whether a broadcast service of interest can be received, where the broadcast service of interest is a broadcast service of a non-serving cell.

The first network device may be a base station of a serving cell. The terminal device is located in the serving cell. The non-serving cell is a cell to which a second network device belongs. The first network device and the second network device may be different network devices, or may be a same network device.

For the terminal device, determining that the broadcast service of interest can be received may include one or more of the following cases: A broadcast service of the non-serving cell starts to be received or is being received; a system information block SIB1 of the non-serving cell includes scheduling information of SIB20 of the non-serving cell; or the non-serving cell provides SIB20.

If the terminal device does not receive the broadcast service of the non-serving cell, the system information block SIB1 of the non-serving cell does not include the scheduling information of SIB20 of the non-serving cell, and the non-serving cell does not provide SIB20, the terminal device determines that the broadcast service of interest cannot be received.

Particularly, for a REDCAP terminal device, determining that the broadcast service of interest can be received may further include one or more of the following cases: Fifth indication information is received from the second network device, where the fifth indication information indicates that the non-serving cell can provide a broadcast service for a first-type terminal device; a bandwidth value of a first common frequency resource CFR configured in SIB20 of the non-serving cell does not exceed a first bandwidth value; or a second CFR is configured in the non-serving cell, where the second CFR is a CFR used by the first-type terminal device, and the second CFR and the first CFR are independent of each other. The first-type terminal device is a REDCAP terminal device. The first bandwidth value may be a maximum bandwidth supported by the REDCAP terminal device. A bandwidth value of the second CFR does not exceed a maximum bandwidth supported by the first-type terminal device, and the second CFR may be configured in an additional field in SIB20.

The REDCAP terminal device may determine, based on the fifth indication information, whether the non-serving cell can provide the broadcast service for the first-type terminal device; or may determine, depending on whether the bandwidth value of the first common frequency resource CFR configured in SIB20 of the non-serving cell exceeds the first bandwidth value or whether the second CFR used by the REDCAP terminal device is configured for the non-serving cell, whether the non-serving cell can provide the broadcast service for the first-type terminal device. The REDCAP terminal device may alternatively determine, with reference to the foregoing three cases, whether the non-serving cell can provide the broadcast service for the first-type terminal device.

If the fifth indication information indicates that the non-serving cell cannot provide the broadcast service for the first-type terminal device, the bandwidth value of the first common frequency resource CFR configured in SIB20 of the non-serving cell exceeds the first bandwidth value, and the second CFR used by the REDCAP terminal device is not configured in the non-serving cell, it is determined that the non-serving cell cannot provide the broadcast service for the first-type terminal device.

S602: When determining that the broadcast service of interest can be received, the terminal device sends first indication information to the first network device, where the first indication information indicates the broadcast service of interest.

The first indication information may be an MII. The first indication information may include one or more of the following: a frequency, a subcarrier spacing SCS, a bandwidth, and a modulation order of a broadcast service of the non-serving cell that the terminal device is interested in or is receiving.

Optionally, in addition to determining that the broadcast service of interest of the non-serving cell can be received, the terminal device further needs to trigger sending of the first indication information only when one or more of the following conditions are met:
(1) The first network device sends indication information to the terminal device. The indication information indicates whether the terminal device is allowed to report the first indication information. The indication information may be included in SIB1 sent by the first network device to the terminal device. If the terminal device is allowed to report the first indication information, the terminal device may report the first indication information to the first network device. If the terminal device is not allowed to report the first indication information, the terminal device may not report the first indication information.
(2) The serving cell broadcasts SIB21, SIB21 includes a first frequency that the terminal device is interested in, and an MBS FSAI corresponding to the first frequency is the same as an MBS FSAI that is included in a USD and that the terminal device is interested in; or the serving cell does not broadcast SIB21, and a USD indicates that the terminal device is interested in a broadcast service of a first frequency; or a USD indicates that the terminal device is interested in a first frequency, and the serving cell also broadcasts SIB21, but SIB21 does not provide an FSAI mapping relationship corresponding to a broadcast service of the first frequency.
(3) A band combination capability supported by the terminal device includes the first frequency of the broadcast service that the terminal device is interested in.
(4) The terminal device has not reported the first indication information since entering an RRC connected state last time. Alternatively, compared with information about a broadcast service in the first indication information reported last time, information about the broadcast service that the terminal device is interested in changes, for example, a frequency of the broadcast service of interest changes, or a priority of the broadcast service changes. Alternatively, after the terminal device reports the first indication information last time, the terminal device is connected to a base station that does not support a broadcast service. The base station that does not support a broadcast service may be a base station that does not provide SIB21, or a base station that does not indicate, in SIB1, that the first indication information is allowed to be reported, or a base station that does not provide SIB21 and that does not indicate, in SIB1, that the first indication information is allowed to be reported.

This embodiment of this application relates to the following two scenarios:
In a first scenario, the terminal device supports a unicast service and a broadcast service in sharing a hardware resource. In other words, the terminal device is capable of simultaneously receiving a broadcast service of a non-serving cell and performing unicast or multicast transmission in a serving cell. For example, if the terminal device performs unicast transmission in a cell of a frequency A, the terminal device is interested in receiving a broadcast service of a non-serving cell of a frequency B, and the serving cell of the frequency A and the non-serving cell of the frequency B meet a band combination capability of carrier aggregation supported by the terminal device, the terminal device can simultaneously perform unicast transmission in the serving cell and receive the broadcast service of the non-serving cell.

In a second scenario, the terminal device cannot simultaneously perform unicast and/or multicast transmission in a serving cell and receive a broadcast service of a non-serving cell. For example, the terminal device performs unicast transmission in a plurality of serving cells in a carrier aggregation or dual connectivity manner, and the terminal device is interested in receiving the broadcast service of the non-serving cell. However, the terminal device simultaneously performs unicast transmission in the plurality of serving cells and receives the broadcast service of the non-serving cell, which exceeds a band combination capability supported by the terminal device. Therefore, when performing unicast and/or multicast transmission, the terminal device cannot simultaneously obtain system information of the non-serving cell. If the terminal device needs to obtain the system information of the non-serving cell, the terminal device needs to stop unicast and/or multicast transmission in the serving cell.

In the first scenario, the terminal device may report the first indication information in the following several manners:
In a first optional manner, in a one-step reporting manner, when determining that the broadcast service of interest can be received, the terminal device sends the first indication information to the first network device, where the first indication information may include the frequency, the subcarrier spacing SCS, the bandwidth, the modulation order, and the like of the broadcast service of the non-serving cell that the terminal device is interested in or is receiving.

Optionally, when determining that the broadcast service of interest cannot be received, the terminal device may not send the first indication information.

In a second optional manner, in a two-step reporting manner, before determining whether the broadcast service of interest can be received, the terminal device first sends second indication information to the first network device, where the second indication information indicates the first frequency of the broadcast service of interest, and the first frequency may be determined based on SIB21 that is broadcast by the serving cell or based on the USD; and then when determining that the broadcast service of interest can be received, the terminal device sends the first indication information to the first network device, where the first indication information may include one or more of the frequency, the subcarrier spacing SCS, the bandwidth, and the modulation order of the broadcast service of the non-serving cell that the terminal device is interested in or is receiving.

Optionally, after the first network device receives the second indication information from the terminal device, the first network device may send third indication information to the terminal device, where the third indication information indicates to report the first indication information or indicates that the terminal device needs to report the first indication information, that is, indicates that the terminal device further needs to report additional information (the first indication information) in addition to the second indication information. The terminal device continues to report the first indication information based on the third indication information. Optionally, the third indication information has the following possible implementations:
Manner 1: The third indication information is first configuration information, the first configuration information is used to configure the terminal device to obtain the first indication information in an autonomous gap (autonomous gap), and the first configuration information implicitly indicates the terminal device to report the first indication information; and the terminal device obtains the first indication information in the autonomous gap time.
Manner 2: The third indication information is second configuration information, the second configuration information is used to configure the terminal device to obtain the first indication information in a discontinuous reception (discontinuous reception, DRX) idle time, and the second configuration information implicitly indicates the terminal device to report the first indication information; and the terminal device obtains the first indication information in the DRX idle time.
Manner 3: The third indication information includes sixth indication information, and the sixth indication information indicates the terminal device to report the first indication information. For example, the sixth indication information is 1-bit indication information, and when the 1 bit is set to 1, it indicates that the terminal device needs to report the first indication information.
Manner 4: The third indication information includes seventh indication information and first configuration information, and the terminal device obtains the first indication information in an autonomous gap time based on the first configuration information. When the third indication information includes the seventh indication information but does not include the first configuration information, the terminal device obtains the first indication information in a DRX idle time.

Optionally, when determining that the broadcast service of interest cannot be received, the terminal device may not send the first indication information; or when determining that the broadcast service of interest cannot be received, the terminal device does not send the first indication information in a first time period, where the first time period is a period of time since the third indication information is received. After sending the third indication information, the first network device starts a first timer. If the first indication information sent by the terminal device is not received before the first timer expires, the first network device considers that the terminal device does not receive the broadcast service of the non-serving cell or is not interested in receiving the broadcast service of the non-serving cell.

Optionally, when determining that the broadcast service of interest cannot be received, the terminal device may send fourth indication information to the first network device, where the fourth indication information indicates that the broadcast service of the first frequency is no longer of interest or the first frequency is invalid. The fourth indication information does not include the first frequency, and it is implicitly indicated that the terminal device is no longer interested in the broadcast service of the first frequency. Alternatively, the fourth indication information includes first signaling, and the first signaling indicates that the broadcast service of the first frequency is no longer of interest or the first frequency is invalid. Display signaling indicates that the terminal device is no longer interested in the broadcast service of the first frequency or the first frequency is invalid.

In the second scenario, the terminal device may report the first indication information in the following several manners:
In a first optional manner, in a one-step reporting manner, the terminal device directly interrupts a multicast or unicast service with the serving cell, to receive the system information (SIB1 and/or SIB20) of the non-serving cell, so as to determine whether the broadcast service of the non-serving cell can be received. When determining that the broadcast service of interest can be received, the terminal device sends the first indication information to the first network device.

In a second optional manner, in a one-step reporting manner, the terminal device sends indication information to the first network device, where the indication information indicates that the terminal device has no information other than a frequency of receiving the broadcast service in the non-serving cell; or sends a request message to the first network device, where the request message is used to request the first network device to configure an autonomous gap or is used to request to obtain the first indication information in a DRX idle time. After receiving the third indication information of the network device, when determining that the broadcast service of interest can be received, the terminal device sends the first indication information to the first network device.

Optionally, when determining that the broadcast service of interest cannot be received, the terminal device does not send the first indication information. If the first network device does not receive the first indication information in a time period after the third indication information is sent, it is considered that the terminal device does not receive the broadcast service of the non-serving cell, or the terminal device is not interested in receiving the broadcast service of the non-serving cell.

In a third optional manner, in a two-step reporting manner, before determining whether the broadcast service of interest can be received, the terminal device first sends second indication information to the first network device, where the second indication information indicates the first frequency of the broadcast service of interest. After receiving the second indication information, the first network device sends the third indication information to the terminal device. After receiving the third indication information sent by the first network device, the terminal device obtains the system information (SIB1 and/or SIB20) of the non-serving cell in the autonomous gap or the DRX idle time, determines whether the broadcast service of the non-serving cell can be received, and when determining that the broadcast service of interest can be received, sends the first indication information to the first network device. For the third indication information, refer to the foregoing descriptions.

Optionally, when determining that the broadcast service of interest cannot be received, the terminal device may not send the first indication information; or when determining that the broadcast service of interest cannot be received, the terminal device does not send the first indication information in a first time period, where the first time period is a period of time since the third indication information is received. After sending the third indication information, the first network device starts a first timer. If the first indication information sent by the terminal device is not received before the first timer expires, it is considered that the first frequency at which the broadcast service of interest is previously reported is invalid.

Optionally, when determining that the broadcast service of interest cannot be received, the terminal device may send fourth indication information to the first network device, where the fourth indication information indicates that the broadcast service of the first frequency is no longer of interest or the first frequency is invalid. The fourth indication information does not include the first frequency, and it is implicitly indicated that the terminal device is no longer interested in the broadcast service of the first frequency. Alternatively, the fourth indication information includes first signaling, and the first signaling indicates that the broadcast service of the first frequency is no longer of interest or the first frequency is invalid. Display signaling indicates that the terminal device is no longer interested in the broadcast service of the first frequency or the first frequency is invalid.

In this embodiment of this application, when determining that the broadcast service of interest can be received, the terminal device sends the first indication information to the first network device. When determining that the broadcast service of interest cannot be received, the terminal device does not report the first indication information, or indicates that the first frequency in previously reported second indication information is invalid, so that the first network device is prevented from unnecessarily suppressing unicast and multicast scheduling in a serving cell due to a broadcast service, thereby ensuring communication performance of unicast and multicast in the serving cell.

FIG. 7 is a schematic flowchart of another communication method according to an embodiment of this application. The method mainly includes the following steps.

S701: A terminal device receives a first message from a network device, where the first message includes information about N multicast sessions provided by the network device, the information about the N multicast sessions includes a first identifier of each of the N multicast sessions, and N is an integer greater than 0.

The first message may be an MCCH message, and the first identifier may be a TMGI. The first message may further include configuration information of the N multicast sessions, for example, at least one of a G-RNTI for scrambling and scheduling a multicast session MTCH, a multicast MRB configuration, multicast MTCH scheduling information, and a neighboring cell list of a multicast session.

S702: The terminal device receives a paging message from the network device, where the paging message includes a second identifier of a first multicast session in the N multicast sessions, and the second identifier of the first multicast session indicates that the first multicast session is deactivated.

The second identifier of the first multicast session may alternatively indicate that the first multicast session is in a deactivated state, or indicate that the first multicast session changes from an activated state to a deactivated state. The deactivated state may also be referred to as an inactive state or a non-active state. This is not limited in embodiments of this application.

The paging message may be a group paging message. The second identifier may be a number or bit data, and a quantity of bits of the second identifier is less than a quantity of bits of the first identifier. The paging message carries the second identifier to notify that the first multicast session is in a deactivated state, so that signaling overheads in the paging message can be reduced.

In an implementation, the second identifier of the first multicast session corresponds to a location of the first multicast session in the N multicast sessions. In other words, the second identifier may be determined based on the location of the first multicast session in the N multicast sessions. For example, an MCCH message indicates that a cell provides three multicast sessions; and in the three multicast sessions, a number of a multicast session ranked first is 0, a number of a multicast session ranked second is 1, and a number of a multicast session ranked third is 2. Optionally, the MCCH message is an MCCH message in a current MCCH modification period. For another example, if a cell provides a maximum of 1024 multicast sessions, bit data of each multicast session may be represented by using 10 bits, where 0000000000 indicates a 1^{st} multicast session, 0000000001 indicates a 2^{nd} multicast session, and so on. After receiving the paging message, the terminal device may determine the location of the first multicast session in the N multicast sessions based on the second identifier of the first multicast session, and then determine the first multicast session based on the location of the first multicast session in the N multicast sessions, to determine that the first multicast session is in a deactivated state; or determine the location of the first multicast session in the N multicast sessions based on the second identifier of the first multicast session, and then determine a first identifier of the first multicast session based on the location of the first multicast session in the N multicast sessions, to determine that the first multicast session corresponding to the first identifier is in a deactivated state.

In another implementation, the information about the N multicast sessions further includes a second identifier of each multicast session, and the second identifier of each multicast session corresponds to the first identifier of each multicast session. For example, an MCCH message includes bit data of each multicast session, the bit data of each multicast session is in one-to-one correspondence with a TMGI of each multicast session, and a length of the bit data may be 10 bits, which can indicate 1024 multicast sessions. An identifier TMGI-0 of a multicast session corresponds to bit data 0000000000 of the multicast session, an identifier TMGI-1 of a multicast session corresponds to bit data 0000000001 of the multicast session, and so on. After receiving the paging message, the terminal device searches first information for the first identifier corresponding to the second identifier based on a mapping relationship between the second identifier of each multicast session and the first identifier of each multicast session in the first information, and then determines the first multicast session based on the first identifier, to determine that the first multicast session is in a deactivated state.

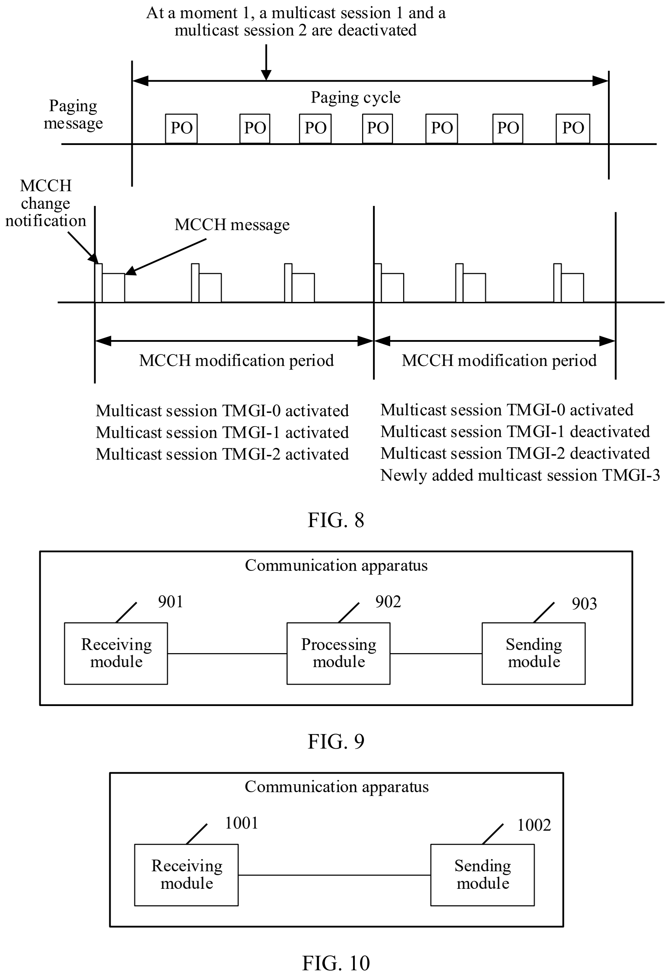

FIG. 8 is a diagram of multicast session deactivation according to an embodiment of this application. The network device repeatedly sends an MCCH change notification and an MCCH message in each MCCH modification period. The MCCH change notification indicates whether the MCCH message is updated, and the MCCH message includes information about N multicast sessions provided for a terminal device in an RRC non-connected state. In addition, in one paging cycle, paging occasions (paging occasion, PO) are periodically distributed in the one paging cycle, and the terminal device determines a PO location based on resource configuration information of the network device and an ID of the terminal device, detects DCI in a corresponding PO, parses the DCI to obtain a time-frequency domain resource location of a physical downlink shared channel (physical downlink shared channel, PDSCH), and obtains a paging message at the time-frequency domain resource location of the PDSCH.

Before a moment 1, a cell provides three multicast sessions in an activated state. The three multicast sessions include a multicast session TMGI-0, a multicast session TMGI-1, and a multicast session TMGI-2, which are sequentially arranged first, second, and third in the three multicast sessions. At the moment 1, the network device determines that the multicast session ranked second and the multicast session ranked third in the three multicast sessions are in a deactivated state. The network device sends a paging message to the terminal device, where the paging message carries a multicast session number 1 and a multicast session number 2 that respectively correspond to the multicast session TMGI-1 ranked second and the multicast session TMGI-2 ranked third in the MCCH message. After receiving the paging message, the terminal device may determine, based on the multicast session number 1 and the multicast session number 2, that the multicast session TMGI-1 and the multicast session TMGI-2 are in a deactivated state.

Alternatively, the MCCH message includes a correspondence between the multicast session TMGI-0 and the multicast session number 0, a correspondence between the multicast session TMGI-1 and the multicast session number 1, and a correspondence between the multicast session TMGI-2 and the multicast session number 2. The paging message sent by the network device carries the multicast session number 1 and the multicast session number 2. Based on the correspondence between the multicast session TMGI-1 and the multicast session number 1 and the correspondence between the multicast session TMGI-2 and the multicast session number 2 in the MCCH message, the terminal device may determine that the multicast session TMGI-1 and the multicast session TMGI-2 are in a deactivated state.

In addition, there are the following several cases in which the first message includes the N multicast sessions:
In a first case, the N multicast sessions provided by the cell do not change. This can keep a location, indicated by MCCH messages in different MCCH modification periods, of each multicast session in the N multicast sessions unchanged. Therefore, when one paging cycle covers a plurality of MCCH modification periods, it is ensured that locations of multicast sessions in MCCH messages sent in different MCCH modification periods do not change, and the terminal device receives corresponding paging messages at different PO locations in the paging cycle, where second identifiers of the multicast sessions included in the paging messages all point to a same multicast session.

In a second case, a new multicast session is added to the cell. The new multicast session may be added at the end of the N multicast sessions, so that locations of the N existing multicast sessions remain unchanged. As shown in FIG. 8, a TMGI-3 is added in a 2^{nd} MCCH modification period, the TMGI-3 is located at the end of the three multicast sessions (the TMGI-0, the TMGI-1, and the TMGI-2), and the locations of the three existing multicast sessions do not change.

For the first case and the second case, because the locations of the N multicast sessions do not change, the terminal device may determine a deactivated state of the first multicast session based on the second identifier of the first multicast session in the paging message.

In a third case, one or more multicast sessions in the N multicast sessions are deleted or released in the cell. If the network device deletes one or more multicast sessions included in an MCCH message in a current MCCH modification period, a mapping relationship, obtained by the terminal device in the current MCCH modification period, between a multicast session and a second identifier of the multicast session is different from a mapping relationship, obtained in a previous MCCH modification period, between a multicast session and a second identifier of the multicast session.

For the third case, a deactivated state of the first multicast session may be determined in the following several optional manners:
In an optional manner, the first message is a first message in a previous modification period or a current modification period. The previous modification period or the current modification period is an MCCH modification period. Specifically, the terminal device and the network device may negotiate that the first message is an MCCH message in a previous MCCH modification period or a current MCCH modification period. In other words, a deactivated state of the first multicast session in the current MCCH modification period is determined based on a correspondence between each multicast session and a second identifier of the multicast session in the previous MCCH modification period or the current MCCH modification period.

In another optional manner, the paging message may further include indication information, and the indication information indicates that the first message is a first message in a previous modification period or a current first message modification period. The indication information carried in the paging message indicates that a deactivated state of the first multicast session in a current MCCH modification period is determined based on a correspondence between each multicast session and a second identifier of the multicast session in a previous MCCH modification period or the current MCCH modification period.

It should be noted that, if a deactivated state of the first multicast session in the current MCCH modification period is determined based on a correspondence between each multicast session and a first identifier of the multicast session in the previous MCCH modification period, after receiving the MCCH change notification, the terminal device still needs to store a mapping relationship between each multicast session and a second identifier of the multicast session in the previous MCCH modification period.

As shown in FIG. 8, if the network device releases the multicast session TMGI-0 and deletes the TMGI-0 from the MCCH message in the 2^{nd} MCCH modification period, only three multicast sessions exist in the 2^{nd} MCCH modification period, sequentially including the multicast session TMGI-1, the multicast session TMGI-2, and the multicast session TMGI-3 that respectively correspond to the number 0, the number 1, and the number 2. If the network device sends a paging message to the terminal device, where the paging message includes the multicast session numbers 1 and 2, and the paging message indicates that the terminal device is subject to a mapping relationship between a multicast session number and a multicast session in a previous MCCH modification period, the terminal device determines that numbers of deactivated multicast sessions indicated in the paging message are 1 and 2, which still correspond to the multicast session TMGI-1 and the multicast session TMGI-2 instead of the multicast session TMGI-2 and the multicast session TMGI-3.

In another optional manner, the network device may send first information to the terminal device, where the first information indicates whether the first message is updated, or the first information may indicate to update the first message, or the first information may indicate not to update the first message. The first information may be an MCCH change notification. Optionally, the first information is carried by using downlink control information (downlink control information, DCI) or a medium access control (medium access control, MAC) control element (control element, CE). An update of the first message includes a start of a new MBS session, or an MCCH information update caused by a reason other than the start of the new MBS session, for example, an MBS session stop, a configuration change of an ongoing MBS session, or an information update of a neighboring cell.

If the first information indicates that the first message is not updated, that is, the N multicast sessions in the MCCH do not change, the terminal device determines a deactivated state of the first multicast session based on the second identifier of the first multicast session in the paging message. If the first information indicates that the first message is updated, that is, the N multicast sessions in the MCCH change, the terminal device obtains an updated first message, and determines a deactivated state of the first multicast session based on the updated first message.

When the MCCH message does not change, a deactivated state of the first multicast session is determined with reference to the MCCH message and the paging message. When the MCCH message changes, a deactivated state of the first multicast session is determined by using an updated MCCH message. This can avoid a case in which the network device and the terminal device have different understandings of a deactivated multicast session because the location or the second identifier of the first multicast session in the first message changes because of addition or release of a multicast session. In addition, when the MCCH message is updated, for example, when a multicast session provided by a cell is added or released, the terminal device always needs to obtain an updated MCCH message, and determines a deactivated state of the first multicast session by using the updated MCCH message instead of the paging message. This can reduce resource and energy consumption overheads. In conclusion, the terminal device may flexibly determine a deactivated state of the first multicast session in different manners based on a requirement of an actual scenario.

In another possible design, it is determined, based on that the updated first message does not include configuration information of the first multicast session, that the first multicast session is in a deactivated state. The updated first message includes the first identifier of the first multicast session but does not include the configuration information of the first multicast session, or the updated first message does not include the first identifier of the deactivated first multicast session, to implicitly indicate that the first multicast session is deactivated. Alternatively, it is determined, based on that the updated first message includes the configuration information of the first multicast session, that the first multicast session is in an activated state. Alternatively, display signaling in the updated first message indicates that the first multicast session is in an activated state.

In this embodiment of this application, the second identifier is carried in the paging message, to implement notification of a deactivated state of a multicast session. Compared with using an MCCH message to notify a deactivated state of a multicast session, this avoids a case in which the network device unnecessarily updates an MCCH message and the terminal device unnecessarily receives an MCCH message frequently when configuration information of a multicast session does not change, thereby reducing resource overheads and energy consumption overheads. In addition, because a quantity of bits of the second identifier is less than a quantity of bits of the first identifier, signaling overheads are reduced.

This application further provides a communication method and apparatus. The method includes: A terminal device may determine, based on a paging message sent by a network device, that a multicast session is in an activated state, and determine, depending on whether an MCCH message in a next MCCH modification period of a received paging message includes multicast session configuration information, whether to enter an RRC connected state, or stay in an RRC non-connected state to receive a multicast session. This avoids further aggravating network congestion caused because the terminal device unnecessarily enters an RRC connected state.

In the conventional technology, after a terminal device joins a multicast session, a multicast session may be in a deactivated state, and a network device stops sending data of the multicast session in a deactivated state. Correspondingly, the terminal device may stop receiving the data of the multicast session. Optionally, the terminal device may further stop receiving an MCCH message, where the MCCH message is used to send multicast session configuration information. When the terminal device is in an RRC non-connected state (the RRC non-connected state is an RRC inactive state and/or an RRC idle state), the terminal device may determine, by using a paging message sent by the network device, that a multicast session is restored from a deactivated state to an activated state, where the paging message includes an identifier of the activated multicast session, for example, a TMGI. The terminal device that has joined the multicast session may determine, based on the multicast session identifier included in the paging message, that the multicast session is activated, or the multicast session is restored from a deactivated state to an activated state. After the multicast session is activated, the network device may start to provide data of the multicast session. Optionally, the network device further starts to provide a multicast session configuration, for example, provides a PTM configuration of the multicast session in the MCCH message. Correspondingly, the terminal device starts to receive the multicast session.

However, because an MCCH message is updated only at a boundary of an MCCH modification period, that is, an MCCH message in one MCCH modification period remains unchanged, but a paging cycle of a paging message for sending a multicast session activation notification may be different from the MCCH modification period, the paging cycle may be not aligned with the MCCH modification period, and duration of one paging cycle corresponds to two or more MCCH modification periods. Therefore, after learning that the multicast session is restored to an activated state, if the network device starts to send a paging message to the terminal device in a current MCCH modification period to notify the terminal device, the network device can update the MCCH message only in a next MCCH modification period, where the MCCH message includes configuration information of the activated multicast session. Therefore, in the foregoing scenario, if the terminal device immediately starts to obtain the MCCH message after receiving the paging message in the current MCCH modification period, the MCCH message may not include a configuration of the activated multicast session. In this case, the terminal device may mistakenly consider that a current cell cannot provide the configuration information of the multicast session, and therefore enter an RRC connected state to receive the multicast session. In this case, the network device may be in a congested state, and the terminal device is not expected to enter an RRC connected state. Therefore, in this scenario, the terminal device unnecessarily enters an RRC connected state, aggravating network congestion.

To resolve the foregoing problem, the present invention provides a communication method, to avoid aggravating network congestion caused because a terminal device unnecessarily enters an RRC connected state.

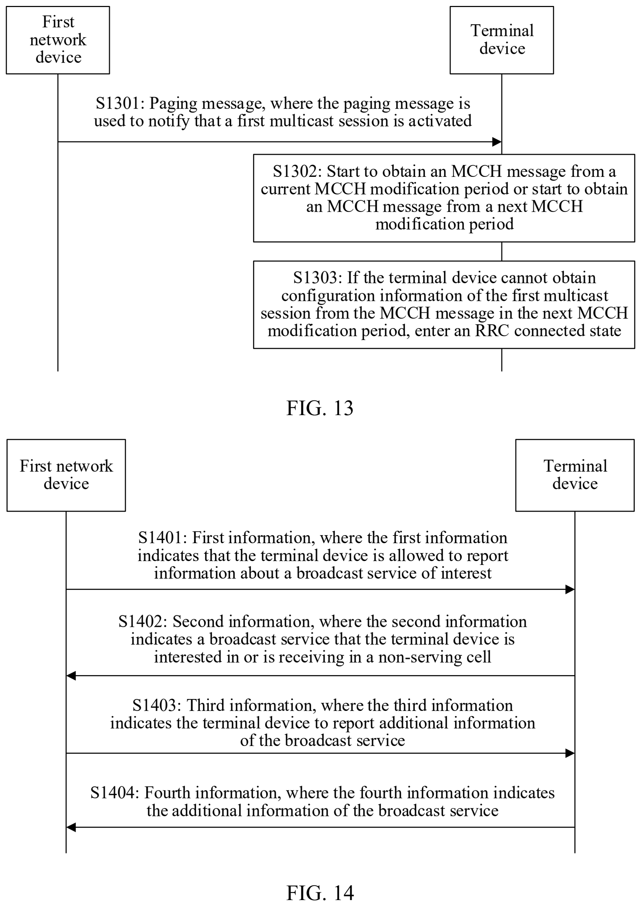

FIG. 13 is a schematic flowchart of a communication method according to an embodiment of this application. The method mainly includes the following steps.

The method may be performed by a first apparatus. The first apparatus may be a terminal device, or may be a component (for example, a chip, a module, or a circuit) of the terminal device. This is not limited in this application. An example in which the first apparatus is a terminal device is used below for description.

S1301: The terminal device receives a paging message sent by a first network device, where the paging message is used to notify that a first multicast session is activated.

That the first multicast session is activated may also be understood as that the first multicast session changes from a deactivated state (or an inactive state) to an activated state.

Optionally, the paging message includes first indication information, and the first indication information indicates the terminal device to start to obtain an MCCH message from a current MCCH modification period or start to obtain an MCCH message from a next MCCH modification period.

The MCCH message includes configuration information of the first multicast session. The configuration information of the first multicast session may include a TMGI of the first multicast session, a G-RNTI for scheduling the first multicast session, an MRB configuration of the first multicast session, and the like.

In this way, the first network device may determine the first indication information depending on whether an MCCH message in an MCCH modification period in which the paging message is sent includes the configuration information of the first multicast session. Specifically, if the MCCH message in the MCCH modification period in which the paging message is sent includes the configuration information of the first multicast session, the first indication information indicates the terminal device to start to obtain the MCCH message from the current MCCH modification period; or if the MCCH message in the MCCH modification period in which the paging message is sent does not include the configuration information of the first multicast session, but the MCCH message in the next MCCH modification period includes the configuration information of the first multicast session, the first indication information indicates to start to obtain the MCCH message from the next MCCH modification period.

In this manner, it can be ensured that the terminal device and the network device align a time of obtaining the MCCH message to obtain the configuration information of the first multicast session. This avoids a problem that network congestion is aggravated because the terminal device blindly restores/enters an RRC connected state because the terminal device starts to obtain the MCCH message from the current MCCH modification period but cannot obtain the configuration information of the first multicast session in a scenario in which the network device starts to provide the configuration information of the first multicast session in the next MCCH modification period.

The current MCCH modification period may be understood as an MCCH modification period in which the terminal device is located when the paging message is received. Starting to obtain the MCCH message from the current MCCH modification period may be replaced with starting to obtain the MCCH message from a same slot in which the paging message is received, or starting to obtain the MCCH message from a next MCCH repetition period of the MCCH modification period in which the paging message is received. Starting to obtain the MCCH message from the next MCCH modification period may be understood as starting to obtain the MCCH message from the next MCCH modification period of the MCCH modification period in which the paging message is received. Obtaining the MCCH message may be replaced with obtaining configuration information of an activated multicast session. For example, the first indication information is 2 bits, a 1^{st} bit indicates that the MCCH message starts to be obtained from the current MCCH modification period, and a 2^{nd} bit indicates that the MCCH message starts to be obtained from the next MCCH modification period.

The terminal device is in an RRC non-connected state, including an RRC inactive state (RRC inactive state) and/or an RRC idle state (RRC idle state).

S1302: The terminal device starts to obtain the MCCH message from the current MCCH modification period or starts to obtain the MCCH message from the next MCCH modification period.

Optionally, the terminal device determines, based on the first indication information, to start to obtain the MCCH message from the current MCCH modification period or start to obtain the MCCH message from the next MCCH modification period.

S1303: If the terminal device cannot obtain the configuration information of the first multicast session from the MCCH message in the next MCCH modification period, the terminal device enters an RRC connected state.

Optionally, when the terminal device starts to obtain the MCCH message from the current MCCH modification period, if the configuration information of the first multicast session cannot be obtained from the MCCH message in the current MCCH modification period, the terminal device keeps in an RRC non-connected state. If the terminal device obtains the configuration information of the first multicast session from the MCCH message in the next MCCH modification period, the terminal device keeps in an RRC non-connected state and starts to receive the first multicast session. If the configuration information of the first multicast session cannot be obtained from the MCCH message in the next MCCH modification period, the terminal device enters an RRC connected state or restores to an RRC connected state.

This can avoid a case in which network congestion is aggravated because the terminal device does not need to enter an RRC connected state when the terminal device does not obtain a configuration of the first multicast session from the MCCH message in the current MCCH modification period and then blindly enters an RRC connected state but actually the network device may send an updated MCCH message in the next MCCH modification period.

Because there may be a plurality of terminal devices joining one multicast session, to avoid missing receiving of an activated multicast session by a terminal device, the network device needs to ensure that a multicast session is provided after the paging message is notified to all terminal devices that join the multicast session and that camp on a cell of the network device. Otherwise, if a terminal device receives a multicast session activation notification only after the network device has started to provide an activated multicast session, the terminal device misses receiving of the multicast session in a period of time, affecting multicast service quality and user experience.

In a possible implementation, the first network device ensures that an activation notification of the first multicast session (for example, a paging message including an identifier of the first multicast session) is sent to all terminal devices that join the first multicast session and that need to be notified by the first network device, and then starts to provide the first multicast session.

In another possible implementation, the first network device ensures, in one MCCH modification period, that an activation notification of the first multicast session is sent to all terminal devices that join the first multicast session and that need to be notified by the first network device, and sends an updated MCCH message in a next MCCH modification period, where the updated MCCH message includes the configuration information of the first multicast session. In an implementation, one MCCH modification period includes paging occasions (paging occasion, PO) corresponding to all terminal devices that need to be notified. The foregoing PO may be a PO calculated based on an identifier (ID) of the terminal device, or a PO separately used for a group notification. This is not limited in this application. Specifically, the terminal device that needs to be notified may include a terminal device that joins the first multicast session and for which the first network device reserves a terminal device context (context), or may include a terminal device to which another network device notifies the first network device that the first multicast session is activated. In this way, the terminal device starts to obtain the MCCH message from the next MCCH modification period, and may receive the configuration of the first multicast session in the MCCH message. The first network device starts to provide data of the first multicast session from the next MCCH modification period. This can also ensure that the terminal device does not miss receiving of the first multicast session.

This application further provides a communication method and apparatus. In a scenario in which a terminal device receives unicast and/or multicast in a serving cell, and a capability of receiving broadcast in a non-serving cell is shared, the terminal device may indicate, to a network device corresponding to the serving cell, information about a broadcast service that the terminal device is interested in or is receiving in the non-serving cell, and the network device may learn of a capability or a resource used by the terminal device to receive broadcast in the non-serving cell, to determine a capability that can be used for unicast and/or multicast in the serving cell. This helps ensure that the terminal device can normally receive unicast/multicast and broadcast services at the same time. However, in some scenarios, in carrier aggregation CA or dual connectivity DC configured by the network device corresponding to the serving cell, the terminal device may not have sufficient capabilities or resources to obtain information about a broadcast service of interest in the non-serving cell. For this scenario, the present invention provides a communication method. Therefore, a network device can configure a gap (gap) or discontinuous reception (discontinuous reception, DRX) for a terminal device, so that the terminal device can obtain information about a broadcast service in a non-serving cell in a gap time or DRX idle time. This avoids interruption of receiving unicast and/or multicast in a serving cell, avoids a packet loss of unicast/multicast communication, and ensures user experience.

FIG. 14 is a schematic flowchart of still another communication method according to an embodiment of this application. The method mainly includes the following steps.

The method may be performed by a first apparatus. The first apparatus may be a terminal device, or may be a component (for example, a chip, a module, or a circuit) of the terminal device. This is not limited in this application. An example in which the first apparatus is a terminal device is used below for description.

S1401: The terminal device receives first information sent by a first network device, where the first information indicates that the terminal device is allowed to report information about a broadcast service of interest, and the broadcast service of interest is a broadcast service that the terminal device is interested in or is receiving in a non-serving cell.

Optionally, the first information is carried in SIB1.

Correspondingly, the first network device sends the first information to the terminal device.

Optionally, the first network device may be a network device corresponding to a serving cell of the terminal device. Optionally, the first network device is a network device corresponding to a primary cell PCell of the terminal device.

S1402: The terminal device sends second information to the first network device based on the first information and a first reporting condition, where the second information indicates a broadcast service that the terminal device is interested in or is receiving in the non-serving cell.

The second information includes at least one of a frequency, a subcarrier spacing SCS, a bandwidth, and a modulation order of the broadcast service that is of interest or that is being received in the non-serving cell.

Correspondingly, the first network device receives the second information.

The frequency, the subcarrier spacing SCS, the bandwidth, and the modulation order of the broadcast service may be understood as a frequency, an SCS, a bandwidth, and a modulation order of receiving the broadcast service by the terminal device in the non-serving cell.

At least one of the subcarrier spacing SCS, the bandwidth, and the modulation order of the broadcast service may also be referred to as additional information of the broadcast service.

Optionally, the second information may be MBS interest indication (MBS interest indication, MII) information.

The reporting condition may be understood as a trigger condition. When the trigger condition is met, the terminal device sends the information about the broadcast service of interest.

In a possible design, when the first reporting condition is that the terminal device can obtain or has obtained the additional information of the broadcast service of interest in the non-serving cell, the second information includes the frequency of the broadcast service and the additional information. The additional information includes at least one of the SCS, the bandwidth, and the modulation order of the broadcast service. The additional information may also be understood as information other than the frequency of the broadcast service. That the terminal device can obtain the additional information of the broadcast service of interest in the non-serving cell may also be understood as that the terminal device is capable of obtaining the additional information of the broadcast service of interest in the non-serving cell in a current CA/DC configuration of the first network device or a band combination configured by the first network device. The frequency of the broadcast service may be a frequency at which the terminal device is interested in or is receiving the broadcast service in the non-serving cell and that is determined by the terminal device based on SIB21 of the serving cell or based on a user service description (user service description, USD). The USD may be obtained by the terminal device from an application layer or a service layer.

For a manner in which the terminal device obtains the additional information of the broadcast service of interest in the non-serving cell, in a possible manner, the terminal device obtains the additional information by reading (obtaining) a system message of the non-serving cell, for example, SIB1 or SIB20. In another possible manner, the terminal device obtains the additional information by reading (obtaining) an MCCH message of the non-serving cell or an MTCH. A specific manner is not limited in the present invention. For example, the terminal device obtains, based on SIB1 of the non-serving cell, the SCS of receiving the broadcast service in the non-serving cell, and obtains, by using SIB20 of the non-serving cell, the bandwidth of receiving the broadcast service in the non-serving cell. In this embodiment of this application, that the terminal device obtains the additional information may alternatively include that the terminal device autonomously determines, based on system information of the non-serving cell, the additional information to be reported. For example, the bandwidth of the broadcast service that is included in the second information may be greater than or equal to a bandwidth of a common frequency resource (common frequency resource, CFR) configured in SIB20 of the non-serving cell, and less than or equal to a bandwidth of a carrier bandwidth (carrier bandwidth) configured in SIB1 of the non-serving cell. The foregoing bandwidth may be a bandwidth determined by the terminal device based on a capability of the terminal device.

That the terminal device can obtain the additional information of the broadcast service of interest in the non-serving cell may alternatively be replaced with that the terminal device has the additional information of the broadcast service of interest in the non-serving cell, or the terminal device has obtained the additional information of the broadcast service of interest in the non-serving cell.

In a possible design, when the first reporting condition is that the terminal device cannot obtain the additional information of the broadcast service of interest in the non-serving cell, the second information includes only the frequency of the broadcast service but does not include the additional information. In this case, the second information includes the frequency of the broadcast service but does not include the additional information, which may implicitly indicate that the terminal device cannot obtain or does not obtain the additional information of the broadcast service of the non-serving cell, or implicitly request the first network device to configure a gap or DRX to enable the terminal device to obtain the additional information.

That the terminal device cannot obtain the additional information of the broadcast service of interest in the non-serving cell may also be understood as that the terminal device is incapable of obtaining the additional information of the broadcast service of interest in the non-serving cell in a current CA/DC configuration of the first network device or a band combination configured by the first network device. For example, the first network device configures a band combination of a band A and a band B, and the terminal device is interested in receiving a broadcast service of a non-serving cell on a band C. However, the terminal device does not support a band combination of the band A, the band B, and the band C, that is, the terminal device cannot obtain additional information of a broadcast service in a non-serving cell on the band C (for example, read a system message or an MCCH of the non-serving cell) while communicating with a serving cell on the band A and the band B.

That the terminal device cannot obtain the additional information of the broadcast service of interest in the non-serving cell may alternatively be replaced with that the terminal device does not have the additional information of the broadcast service of interest in the non-serving cell.

It may be understood that, in S1402 in this embodiment, the terminal device may send the second information to the first network device under a reporting condition other than the first reporting condition, for example, a second reporting condition. The second reporting condition may include one or more of the following:
Optionally, the second reporting condition includes that the terminal device supports receiving of the broadcast service in the non-serving cell, or the second reporting condition includes that the terminal device is interested in or is receiving the broadcast service in the non-serving cell, or the second reporting condition includes that the terminal device reports a capability of supporting receiving of the broadcast service in the non-serving cell.

Optionally, the second reporting condition further includes one or more of the following:
Condition 1: The terminal device has not reported the information about the broadcast service of interest since entering an RRC connected state. Entering a connected state may be understood as entering an RRC connected state last time.
Condition 2: After reporting the information about the broadcast service of interest last time, the terminal device is connected to a primary cell PCell that does not broadcast SIB21 and that does not include the first information in SIB1; or a previous cell connected to the terminal device or a cell before a previous cell cannot report the information about the broadcast service of interest. For example, the previous cell connected to the terminal device does not broadcast SIB21 and/or SIB1 of the previous cell connected to the terminal device does not include the first information. Consequently, a cell currently connected to the terminal device does not have the information about the broadcast service of interest that has been reported by the terminal device.
Condition 3: At least one of the frequency, the SCS, the bandwidth, or the modulation order of the broadcast service changes compared with content in the second information sent last time; or any one of the information about the broadcast service of interest that needs to be reported by the terminal device changes.
Condition 4: A broadcast frequency that the terminal device is interested in is not empty; or a broadcast session that the terminal device is receiving or is interested in receiving is ongoing or is about to start, and for at least one broadcast session, a broadcast frequency of interest that is determined by the terminal device based on SIB21 or a USD is not empty; or there is broadcast service frequency information that can be reported; or there is broadcast service information that can be reported.

S1403: The terminal device receives third information sent by the first network device, where the third information indicates the terminal device to report additional information of the broadcast service, and the broadcast service is a broadcast service that the terminal device is interested in or is receiving in the non-serving cell.

Correspondingly, the first network device sends the third information to the terminal device, where the third information indicates the terminal device to report the additional information of the broadcast service, and the broadcast service is a broadcast service that the terminal device is interested in or is receiving in the non-serving cell.

That the third information indicates the terminal device to report the additional information of the non-serving cell may alternatively be replaced with that the third information indicates that the terminal device needs to report the additional information of the non-serving cell.

In a possible design, when the second information includes the frequency of the broadcast service but does not include additional information of the broadcast service, S1403 is performed. S1403 is an optional step. In another possible design, when the second information includes only the frequency of the broadcast service, the first network device determines, depending on whether the additional information of the broadcast service can be obtained in another manner, whether to send the third information. Specifically, when the first network device can obtain the additional information of the broadcast service in another manner, the first network device does not send the third information to the terminal device; or when the first network device cannot obtain the additional information of the broadcast service in another manner, the first network device sends the third information to the terminal device.

A possible implementation in which the first network device obtains the additional information of the broadcast service in another manner may be as follows: In a scenario in which a serving cell managed by the first network device and a non-serving cell in which the terminal device is interested in receiving a broadcast service belong to a same public land mobile network (public land mobile network, PLMN), the first network device may learn, in an operation, administration and maintenance (operation, administration and maintenance, OAM) manner or another pre-configuration manner, related information such as an SCS and a bandwidth used by the non-serving cell in the same PLMN to schedule the broadcast service, and the first network device may determine, based on a frequency, reported by the terminal device, of the broadcast service that is of interest or that is being received in the non-serving cell, information such as an SCS and a bandwidth used by a broadcast service scheduled in a non-serving cell corresponding to the frequency. It should be understood that the first network device may obtain the related information of the broadcast service in another manner. This is not limited in this application.

Optionally, the third information has the following possible implementations:
Manner 1: The third information is first configuration information, the first configuration information is used to configure the terminal device to obtain the additional information of the broadcast service in an autonomous gap (autonomous gap), and the first configuration information implicitly indicates the terminal device to report the additional information of the broadcast service.
Manner 2: The third information is second configuration information, the second configuration information is used to configure the terminal device to obtain the additional information of the broadcast service in a DRX idle time, and the second configuration information implicitly indicates the terminal device to report the additional information of the broadcast service.
Manner 3: The third information is first indication information, and the first indication information indicates the terminal device to report the first indication information. For example, the first indication information is 1 bit; and when the bit is set to 1, it indicates that the terminal device needs to report the first indication information; or when the bit is set to 1, it indicates that the first indication information exists, and that the first indication information exists indicates the terminal device to report the additional information of the broadcast service.
Manner 4: The third information includes the foregoing first indication information, and optionally further includes the foregoing first configuration information. When the third information includes the first indication information and the first configuration information, the terminal device is indicated to obtain the additional information of the broadcast service in the autonomous gap and report the additional information. When the third information includes the first indication information but does not include the first configuration information, the terminal device is indicated to obtain the additional information of the broadcast service in the DRX idle time and report the additional information.

Optionally, the third information further includes second indication information, and the second indication information indicates the terminal device to report additional information of a broadcast service of a first frequency. In a possible design manner, the third information includes the second indication information and the first configuration information, and the first configuration information is used to configure the terminal device to obtain the additional information of the broadcast service of the first frequency in the autonomous gap (autonomous gap) and report the additional information; or the third information includes the second indication information and the second configuration information, and the second configuration information is used to configure the terminal device to obtain the additional information of the broadcast service of the first frequency in the discontinuous reception (discontinuous reception, DRX) idle time and report the additional information; or the third information includes the second indication information but does not include the first configuration information, and the terminal device is indicated to obtain the additional information of the broadcast service of the first frequency in the DRX idle time and report the additional information.

Optionally, the first frequency may be one or more frequencies, and the first frequency is a subset of a frequency of a broadcast service indicated by the terminal device in the second information. In this manner, the first network device may further specify that the terminal device reports additional information of a broadcast service of a specific frequency. For example, in S1402, the second information includes frequencies of broadcast services that the terminal device is interested in: a frequency-1, a frequency-2, and a frequency-3. After receiving the second information, the first network device determines that information such as an SCS and a bandwidth of the broadcast service corresponding to the frequency-1 may be obtained in another manner (for example, an OAM manner), but information such as an SCS and a bandwidth of the broadcast services corresponding to the frequency-2 and the frequency 3 cannot be obtained. In this case, the third information sent by the first network device to the terminal device includes the second indication information, to indicate the terminal device to report additional information of the broadcast services of the frequency-2 and the frequency-3. In this way, the first network device may more flexibly indicate, based on a requirement of the first network device, additional information of reporting a frequency of the terminal device. This can avoid complexity of unnecessarily obtaining additional information by the terminal device, and avoid signaling overheads caused by reporting the additional information, thereby avoiding impact on unicast/multicast communication of the serving cell.

In another possible design, second information that is sent by the at least one terminal device and that is received by the first network device includes a first frequency of a broadcast service of interest, and the at least one terminal device includes a first terminal device.

The first network device sends the third information to the first terminal device, and does not send the third information to another terminal device in the at least one terminal device. Correspondingly, the first terminal device receives the third information. For a possible implementation of the third information, refer to the foregoing descriptions. Details are not described herein again.

In this manner, when a plurality of terminal devices indicate, to the first network device, broadcast services of a same frequency are of interest, the first network device may send the third information to one (or more) terminal devices (that is, the first terminal device), to indicate the first terminal device to send additional information of a broadcast service and not send the third information to another terminal device that is interested in receiving a broadcast service of a same frequency. Content of additional information corresponding to broadcast services of a same frequency may be the same. Therefore, in this manner, signaling overheads of reporting additional information by another terminal device can be reduced, and impact on unicast/multicast communication of a serving cell can also be avoided. In this embodiment, the first network device may specify different terminal devices to report additional information of broadcast services of a same frequency or different frequencies, or may specify a same terminal device to report additional information of broadcast services of a plurality of frequencies. A specific implementation may be determined by a network, and is not limited in the present invention.

S1404: The terminal device sends fourth information to the first network device based on the third information, where the fourth information indicates the additional information of the broadcast service.

Optionally, the fourth information indicates the frequency of the broadcast service and the additional information of the broadcast service. There is a correspondence between the frequency of the broadcast service and the additional information of the broadcast service.

Optionally, when the fourth information includes the additional information of the broadcast service but does not include the frequency of the broadcast service, the additional information of the broadcast service corresponds to the frequency of the broadcast service in the second information.

For example, the third information indicates the frequency-1 of the broadcast service and an additional information set 1 corresponding to the frequency-1, and the frequency-2 of the broadcast service and an additional information set 2 corresponding to the frequency-2. Additional information sets corresponding to different frequencies may be the same or different. Specifically, in different cases, at least one or more of SCSs, bandwidths, or modulation orders in different additional information sets are different.

Correspondingly, the first network device receives the additional information of the broadcast service that is sent by the terminal device.

The terminal device obtains the additional information of the broadcast service in the autonomous gap time based on the third information or obtains the additional information of the broadcast service in the DRX idle time, and reports the additional information after obtaining the additional information. A manner in which the terminal device obtains the additional information of the broadcast service based on the third information is described in S1403, and details are not described herein again.

Correspondingly, the first network device sends the third information to the terminal device.

Optionally, the fourth information may be MBS interest indication (MBS interest indication, MII) information.

In a possible design, S1404 may be understood as a scenario of S1402, that is, the first reporting condition is that the terminal device reports the fourth information when the terminal device can obtain or has obtained the additional information of the broadcast service of interest in the non-serving cell.

According to this embodiment of this application, in a scenario in which unicast/multicast and broadcast capabilities of the terminal device are shared, when the terminal device cannot obtain the additional information of the broadcast service of the non-serving cell due to the CA/DC configuration of the serving cell, the terminal device may use a two-step MII reporting manner. A first-step MII (that is, the second information) includes the frequency of the broadcast service but does not include the additional information of the broadcast service, which implicitly indicates that the terminal device cannot obtain the additional information of the broadcast service in this case. After the first-step MII is reported, if the terminal device receives the third information sent by the first network device, the terminal device obtains the additional information in the autonomous gap or the DRX idle time configured by the network, and then the terminal device sends a second-step MII (that is, the fourth information), including the additional information of the broadcast service. Optionally, the second-step MII includes the frequency of the broadcast service and the additional information of the broadcast service, and there is a correspondence between the two. This embodiment of this application can avoid a case in which a unicast and/or multicast service being performed in a serving cell is affected because additional information of a broadcast service of a non-serving cell is obtained, ensure communication quality of the terminal device in the serving cell, and avoid a packet loss. In addition, the first network device may send the third information to the terminal device depending on whether the additional information can be obtained in another manner. This avoids signaling overheads caused by unnecessary sending of the additional information and impact on communication of the terminal device in the serving cell.

It should be noted that there is no sequence constraint between the plurality of steps in the foregoing embodiments, and the steps may be performed simultaneously or sequentially.

It may be understood that, in the foregoing method embodiments, the methods and operations implemented by the terminal device may alternatively be implemented by a component (for example, a chip or a circuit) that may be used in the terminal device, and the methods and operations implemented by the network device may alternatively be implemented by a component (for example, a chip or a circuit) that may be used in the network device.

In embodiments of this application, functional modules of the terminal device or the network device may be obtained through division based on the foregoing method examples. For example, each functional module corresponding to each function may be obtained through division, or two or more functions may be integrated into one processing module. The integrated module may be implemented in a form of hardware, or may be implemented in a form of a software functional module. It should be noted that, in embodiments of this application, division into modules is an example, and is merely logical function division. During actual implementation, another division manner may be used. Descriptions are provided below by using an example in which each functional module is obtained through division corresponding to each function.

The methods provided in embodiments of this application are described in detail above with reference to FIG. 5 to FIG. 7, FIG. 13, and FIG. 14. Communication apparatuses provided in embodiments of this application are described below in detail with reference to FIG. 9 and FIG. 10. It should be understood that descriptions of apparatus embodiments correspond to the descriptions of the method embodiments. Therefore, for content that is not described in detail, refer to the method embodiments. For brevity, details are not described herein again.

FIG. 9 is a diagram of a structure of a communication apparatus according to an embodiment of this application. The communication apparatus may include a receiving module 901, a processing module 902, and a sending module 903. The receiving module 901 and the sending module 903 may communicate with the outside, and the processing module 902 is configured to perform processing, for example, determine whether a broadcast service of a non-serving cell can be received.

In a possible design, the communication apparatus may implement steps or procedures performed by the terminal device corresponding to the foregoing method embodiments, for example, may be a terminal device, or a chip or a circuit configured in the terminal device. The receiving module 901 and the sending module 903 are configured to perform receiving and sending related operations on a terminal device side in the foregoing method embodiment. The processing module 902 is configured to perform processing related operations of the terminal device in the foregoing method embodiment.

In an embodiment:
the receiving module 901 is configured to: when the terminal device is interested in or is receiving a broadcast service of a first frequency, receive indication information from a network device, where the indication information indicates whether a first cell can provide a broadcast service for a first-type terminal device, a frequency of the first cell is the first frequency, and the first-type terminal device is a REDCAP terminal device; and
the processing module 902 is configured to determine, based on the indication information, whether the first frequency is a high-priority frequency for cell reselection.

Optionally, the processing module 902 is further configured to: when the first cell can provide the broadcast service for the first-type terminal device, determine that the first frequency is the high-priority frequency for cell reselection.

Optionally, that the first cell can provide the broadcast service for the first-type terminal device includes: A bandwidth value of a first common frequency resource CFR configured in a system information block SIB20 of the first cell does not exceed a first bandwidth value; or a second CFR is configured in the first cell, where the second CFR is a CFR used by the first-type terminal device, and the second CFR and the first CFR are independent of each other.

Optionally, the processing module 902 is further configured to: when the first cell cannot provide the broadcast service for the first-type terminal device, determine that the first frequency is a low-priority frequency for cell reselection.

Optionally, the indication information is included in SIB1.

Optionally, the indication information corresponds to 1-bit information, and the 1-bit information indicates whether the first cell can provide the broadcast service for the first-type terminal device.

Optionally, the indication information corresponds to 2-bit information, 1^{st}-bit information in the 2-bit information indicates whether SIB1 includes the indication information, and 2^{nd}-bit information in the 2-bit information indicates whether the first cell can provide the broadcast service for the first-type terminal device.

In another embodiment:
the processing module 902 is configured to: when the terminal device establishes a radio resource control RRC connection to a first network device or performs small data transmission SDT with the first network device, determine whether a broadcast service of interest can be received, where the broadcast service of interest is a broadcast service of a non-serving cell; and
the sending module 903 is configured to: when it is determined that the broadcast service of interest can be received, send first indication information to the first network device, where the first indication information indicates the broadcast service of interest.

Optionally, the sending module 903 is further configured to: when it is determined that the broadcast service of interest cannot be received, skip sending the first indication information.

Optionally, the sending module 903 is further configured to send second indication information to the first network device, where the second indication information indicates a first frequency of the broadcast service of interest.

Optionally, the receiving module 901 is configured to receive third indication information from the first network device, where the third indication information indicates to report the first indication information.

Optionally, the sending module 903 is further configured to: when it is determined that the broadcast service of interest cannot be received, skip sending the first indication information in a first time period, where the first time period is a period of time since the third indication information is received.

Optionally, the sending module 903 is further configured to: when it is determined that the broadcast service of interest cannot be received, send fourth indication information to the first network device, where the fourth indication information indicates that a broadcast service of the first frequency is no longer of interest or the first frequency is invalid.

Optionally, the fourth indication information does not include the first frequency.

Optionally, the fourth indication information includes first signaling, and the first signaling indicates that the broadcast service of the first frequency is no longer of interest or the first frequency is invalid.

That the broadcast service of interest can be received includes one or more of the following cases:

A broadcast service of the non-serving cell starts to be received or is being received;
a system information block SIB1 of the non-serving cell includes scheduling information of SIB20 of the non-serving cell; or
the non-serving cell provides SIB20.

That the broadcast service of interest can be received includes one or more of the following cases:

Fifth indication information is received from a second network device, where the fifth indication information indicates that the non-serving cell can provide a broadcast service for a first-type terminal device;
a bandwidth value of a first common frequency resource CFR configured in a system information block SIB20 of the non-serving cell does not exceed a first bandwidth value; or
a second CFR is configured in the non-serving cell, where the second CFR is a CFR used by the first-type terminal device, and the second CFR and the first CFR are independent of each other.

The first-type terminal device is a REDCAP terminal device.

The first indication information includes one or more of the following: a frequency, a subcarrier spacing SCS, a bandwidth, and a modulation order of a broadcast service of the non-serving cell that the terminal device is interested in or is receiving.

In another embodiment:
the receiving module 901 is configured to receive a first message from a network device, where the first message includes information about N multicast sessions provided by the network device, the information about the N multicast sessions includes a first identifier of each of the N multicast sessions, and N is an integer greater than 0.

The receiving module 901 is further configured to receive a paging message from the network device, where the paging message includes a second identifier of a first multicast session in the N multicast sessions, and the second identifier of the first multicast session indicates that the first multicast session is deactivated.

The second identifier of the first multicast session corresponds to a location of the first multicast session in the N multicast sessions included in the first message.

The information about the N multicast sessions further includes a second identifier of each multicast session, and the second identifier of each multicast session corresponds to the first identifier of each multicast session.

The first message is a first message in a previous modification period or a current modification period.

The paging message further includes indication information, and the indication information indicates that the first message is a first message in a previous modification period or a current first message modification period.

Optionally, the receiving module 901 is further configured to receive first information from the network device, where the first information indicates whether the first message is updated.

The processing module 902 is configured to: if the first information indicates that the first message is not updated, determine a deactivated state of the first multicast session based on the second identifier of the first multicast session in the paging message; or if the first information indicates that the first message is updated, obtain an updated first message, and determine a deactivated state of the first multicast session based on the updated first message.

Optionally, the processing module is further configured to: determine, based on that the updated first message does not include configuration information of the first multicast session, that the first multicast session is in a deactivated state; or determine, based on that the updated first message includes the configuration information of the first multicast session, that the first multicast session is in an activated state.

It should be noted that, for implementation of each module, further refer to the corresponding descriptions in the method embodiments shown in FIG. 5 to FIG. 7, FIG. 13, and FIG. 14. The method and the functions performed by the terminal device in the foregoing embodiments are performed.

FIG. 10 is a diagram of a structure of another communication apparatus according to an embodiment of this application. The communication apparatus may include a receiving module 1001 and a sending module 1002. The receiving module 1001 and the sending module 1002 may communicate with the outside. The receiving module 1001 and the sending module 1002 may also be referred to as a communication interface, a transceiver module, or a transceiver unit.

In a possible design, the communication apparatus may implement steps or procedures performed by the network device corresponding to the foregoing method embodiments, for example, may be a network device, or a chip or a circuit configured in the network device. The receiving module 1001 and the sending module 1002 are configured to perform receiving and sending related operations on a network device side in the foregoing method embodiments.

In an embodiment:
the sending module 1002 is configured to send indication information to a terminal device, where the indication information indicates whether a first cell can provide a broadcast service for a first-type terminal device, and the first-type terminal device is a REDCAP terminal device.

That the first cell can provide the broadcast service for the first-type terminal device includes: A bandwidth value of a first common frequency resource CFR configured in a system information block SIB20 of the first cell does not exceed a first bandwidth value; or a second CFR is configured in the first cell, where the second CFR is a CFR used by the first-type terminal device, and the second CFR and the first CFR are independent of each other.

The indication information is included in SIB1.

The indication information corresponds to 1-bit information, and the 1-bit information indicates whether the first cell can provide the broadcast service for the first-type terminal device.

The indication information corresponds to 2-bit information, 1^{st}-bit information in the 2-bit information indicates whether SIB1 includes the indication information, and 2^{nd}-bit information in the 2-bit information indicates whether the first cell can provide the broadcast service for the first-type terminal device.

In another embodiment:
the receiving module 1001 is configured to receive first indication information from a terminal device, where the first indication information indicates a broadcast service of interest that can be received by the terminal device, and the broadcast service of interest is a broadcast service of a non-serving cell.

Optionally, the receiving module 1001 is further configured to receive second indication information from the terminal device, where the second indication information indicates a first frequency of the broadcast service of interest.

Optionally, the sending module 1002 is configured to send third indication information to the terminal device, where the third indication information indicates to report the first indication information.

Optionally, the receiving module 1001 is further configured to receive fourth indication information from the terminal device, where the fourth indication information indicates that a broadcast service of the first frequency is no longer of interest or the first frequency is invalid.

The fourth indication information does not include the first frequency.

The fourth indication information includes first signaling, and the first signaling indicates that the broadcast service of the first frequency is no longer of interest or the first frequency is invalid.

The first indication information includes one or more of the following: a frequency, a subcarrier spacing SCS, a bandwidth, and a modulation order of a broadcast service of the non-serving cell that the terminal device is interested in or is receiving.

In another embodiment:
the sending module 1002 is configured to send a first message to a terminal device, where the first message includes configuration information of N multicast sessions, the configuration information of each of the N multicast sessions includes a first identifier of each multicast session, and N is an integer greater than 0.

The sending module 1002 is further configured to send a paging message to the terminal device, where the paging message includes a second identifier of a first multicast session in the N multicast sessions, and the second identifier of the first multicast session indicates that the first multicast session is in a deactivated state.

The second identifier of the first multicast session corresponds to a location of the first multicast session in the N multicast sessions.

The configuration information of the N multicast sessions further includes a second identifier of each multicast session, and the second identifier of each multicast session corresponds to the first identifier of each multicast session.

The first message is a first message in a previous modification period or a current modification period.

The paging message further includes indication information, and the indication information indicates that the first message is a first message in a previous modification period or a current first message modification period.

Optionally, the sending module 1002 is further configured to send first information to the terminal device, where the first information indicates whether to update the first message.

It should be noted that, for implementation of each module, further refer to the corresponding descriptions in the method embodiments shown in FIG. 5 to FIG. 7, FIG. 13, and FIG. 14. The method and the functions performed by the network device in the foregoing embodiments are performed.

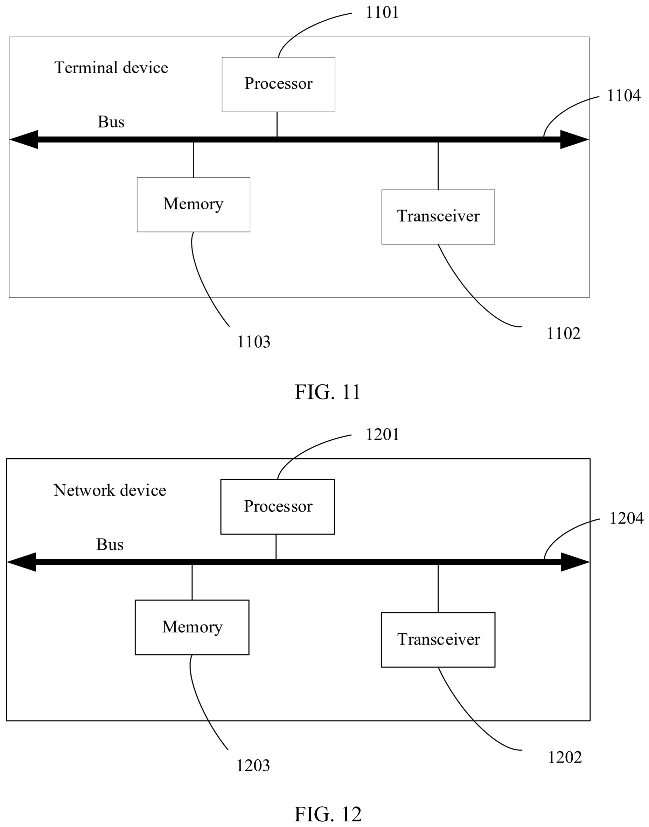

FIG. 11 is a diagram of a structure of a terminal device according to an embodiment of this application. The terminal device may be used in the system shown in FIG. 1A and FIG. 1B, to perform functions of the terminal device in the foregoing method embodiments, or implement steps or procedures performed by the terminal device in the foregoing method embodiments.

As shown in FIG. 11, the terminal device includes a processor 1101 and a transceiver 1102. Optionally, the terminal device further includes a memory 1103. The processor 1101, the transceiver 1102, and the memory 1103 may communicate with each other through an internal connection path, to transfer a control signal and/or a data signal. The memory 1103 is configured to store a computer program. The processor 1101 is configured to invoke the computer program from the memory 1103 and run the computer program, to control the transceiver 1102 to send and receive a signal. Optionally, the terminal device may further include an antenna, configured to send, by using a radio signal, uplink data or uplink control signaling that is output by the transceiver 1102.

The processor 1101 and the memory 1103 may be integrated into one processing apparatus. The processor 1101 is configured to execute program code stored in the memory 1103, to implement the foregoing functions. During specific implementation, the memory 1103 may alternatively be integrated into the processor 1101, or may be independent of the processor 1101. The processor 1101 may correspond to the processing module in FIG. 9.

The transceiver 1102 may correspond to the receiving module and the sending module in FIG. 9, and may also be referred to as a transceiver unit or a transceiver module. The transceiver 1102 may include a receiver (which is also referred to as a receiver machine or a receiver circuit) and a transmitter (which is also referred to as a transmitter machine or a transmitter circuit). The receiver is configured to receive a signal, and the transmitter is configured to transmit a signal.

It should be understood that the terminal device shown in FIG. 11 can implement processes related to the terminal device in the method embodiments shown in FIG. 5 to FIG. 7. Operations and/or functions of the modules in the terminal device are intended to implement corresponding procedures in the foregoing method embodiments. For details, refer to the descriptions in the foregoing method embodiments. To avoid repetition, detailed descriptions are properly omitted herein.

The processor 1101 may be configured to perform an action that is implemented inside the terminal device and that is described in the foregoing method embodiments. The transceiver 1102 may be configured to perform an action of sending by the terminal device to the network device or an action of receiving from the network device in the foregoing method embodiments. For details, refer to the descriptions in the foregoing method embodiments. Details are not described herein again.

The processor 1101 may be a central processing unit, a general-purpose processor, a digital signal processor, an application-specific integrated circuit, a field-programmable gate array or another programmable logic device, a transistor logic device, a hardware component, or any combination thereof. The processor may implement or execute various example logical blocks, modules, and circuits described with reference to content disclosed in this application. Alternatively, the processor 1101 may be a combination of processors implementing a computing function, for example, a combination including one or more microprocessors, or a combination of a digital signal processor and a microprocessor. The communication bus 1104 may be a peripheral component interconnect PCI bus, an extended industry standard architecture EISA bus, or the like. The bus may be classified into an address bus, a data bus, a control bus, and the like. For ease of representation, only one bold line represents the bus in FIG. 11, but this does not mean that there is only one bus or only one type of bus. The communication bus 1104 is configured to implement connection and communication between these components. The transceiver 1102 in this embodiment of this application is configured to perform signaling or data communication with another node device. The memory 1103 may include a volatile memory, for example, a nonvolatile dynamic random access memory (nonvolatile random access memory, NVRAM), a phase change random access memory (phase change RAM, PRAM), or a magnetoresistive random access memory (magnetoresistive RAM, MRAM), or may include a nonvolatile memory, for example, at least one magnetic disk storage device, an electronically erasable programmable read-only memory (electrically erasable programmable read-only memory, EEPROM), a flash memory device such as an NOR flash memory (NOR flash memory) or a NAND flash memory (NAND flash memory), or a semiconductor device such as a solid-state drive (solid-state drive, SSD). Optionally, the memory 1103 may alternatively be at least one storage apparatus located away from the processor 1101. Optionally, the memory 1103 may further store a group of computer program code or configuration information. Optionally, the processor 1101 may further execute the program stored in the memory 1103. The processor may cooperate with the memory and the transceiver to perform any method and function of the terminal device in embodiments of this application.

FIG. 12 is a diagram of a structure of a network device according to an embodiment of this application. The network device may be used in the system shown in FIG. 1A and FIG. 1B, to perform functions of the network device in the foregoing method embodiments, or implement steps or procedures performed by the network device in the foregoing method embodiments.

As shown in FIG. 12, the network device includes a processor 1201 and a transceiver 1202. Optionally, the network device further includes a memory 1203. The processor 1201, the transceiver 1202, and the memory 1203 may communicate with each other through an internal connection path, to transfer a control signal and/or a data signal. The memory 1203 is configured to store a computer program. The processor 1201 is configured to invoke the computer program from the memory 1203 and run the computer program, to control the transceiver 1202 to send and receive a signal. Optionally, the network device may further include an antenna, configured to send, by using a radio signal, uplink data or uplink control signaling that is output by the transceiver 1202.

The processor 1201 and the memory 1203 may be integrated into one processing apparatus. The processor 1201 is configured to execute program code stored in the memory 1203, to implement the foregoing functions. During specific implementation, the memory 1203 may alternatively be integrated into the processor 1201, or may be independent of the processor 1201.

The transceiver 1202 may correspond to the receiving module and the sending module in FIG. 10, and may also be referred to as a transceiver unit or a transceiver module. The transceiver 1202 may include a receiver (which is also referred to as a receiver machine or a receiver circuit) and a transmitter (which is also referred to as a transmitter machine or a transmitter circuit). The receiver is configured to receive a signal, and the transmitter is configured to transmit a signal.

It should be understood that the network device shown in FIG. 12 can implement processes related to the network device in the method embodiments shown in FIG. 5 to FIG. 7. Operations and/or functions of the modules in the network device are intended to implement corresponding procedures in the foregoing method embodiments. For details, refer to the descriptions in the foregoing method embodiments. To avoid repetition, detailed descriptions are properly omitted herein.

The processor 1201 may be configured to perform an action that is implemented inside the network device and that is described in the foregoing method embodiments. The transceiver 1202 may be configured to perform an action of sending by the network device to the terminal device or an action of receiving from the terminal device in the foregoing method embodiments. For details, refer to the descriptions in the foregoing method embodiments. Details are not described herein again.

The processor 1201 may be various types of processors mentioned above. The communication bus 1204 may be a peripheral component interconnect PCI bus, an extended industry standard architecture EISA bus, or the like. The bus may be classified into an address bus, a data bus, a control bus, and the like. For ease of representation, only one bold line represents the bus in FIG. 12, but this does not mean that there is only one bus or only one type of bus. The communication bus 1204 is configured to implement connection and communication between these components. The transceiver 1202 in the device in this embodiment of this application is configured to perform signaling or data communication with another device. The memory 1203 may be various types of memories mentioned above. Optionally, the memory 1203 may alternatively be at least one storage apparatus located away from the processor 1201. The memory 1203 stores a group of computer program code or configuration information, and the processor 1201 executes the program in the memory 1203. The processor may cooperate with the memory and the transceiver to perform any method and function of the network device in embodiments of this application.

An embodiment of this application further provides a chip system. The chip system includes a processor, configured to support a terminal device or a network device in implementing a function in any one of the foregoing embodiments, for example, generating or processing the broadcast service in the foregoing methods.

In a possible design, the chip system may further include a memory, and the memory is configured to store a computer program and data that are necessary for the terminal device or the network device. The chip system may include a chip, or may include a chip and another discrete device. An input and an output of the chip system respectively correspond to receiving and sending operations of the terminal device or the network device in the method embodiments.

According to the methods provided in embodiments of this application, this application further provides a computer program product. The computer program product includes a computer program, and when the computer program is run on a computer, the computer is enabled to perform the method according to any one of the embodiments shown in FIG. 5 to FIG. 7, FIG. 13, and FIG. 14.

According to the methods provided in embodiments of this application, this application further provides a computer-readable medium. The computer-readable medium stores a computer program, and when the computer program is run on a computer, the computer is enabled to perform the method according to any one of the embodiments shown in FIG. 5 to FIG. 7, FIG. 13, and FIG. 14.

According to the methods provided in embodiments of this application, this application further provides a communication system, including the foregoing one or more terminal devices and the foregoing one or more network devices.

All or some of the foregoing embodiments may be implemented by using software, hardware, firmware, or any combination thereof. When software is used to implement embodiments, all or some of the embodiments may be implemented in a form of a computer program product. The computer program product includes one or more computer instructions. When the computer instructions are loaded and executed on a computer, all or some of the procedures or functions according to embodiments of this application are generated. The computer may be a generalpurpose computer, a special-purpose computer, a computer network, or any other programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid state drive (solid state disc, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving first information, wherein the first information indicates that a terminal device is allowed to report information about a first broadcast service, and the first broadcast service is a broadcast service that the terminal device is interested in or is receiving in a non-serving cell; and
sending second information if the terminal device does not have additional information of the first broadcast service, wherein the second information comprises a frequency of the broadcast service but does not comprise the additional information, and the additional information comprises a subcarrier spacing SCS and a bandwidth of the broadcast service; and
sending fourth information if the terminal device has obtained the additional information of the first broadcast service, wherein the fourth information comprises a frequency of the broadcast service and the additional information.

2. The communication method according to claim 1, wherein sending the fourth information if the terminal device has obtained the additional information of the first broadcast service comprises:
sending the fourth information if the terminal device has obtained the additional information of the first broadcast service after the second information is sent.

3. The communication method according to claim 1 or 2, wherein before sending the fourth information if the terminal device has obtained the additional information of the first broadcast service, the method further comprises:
receiving third information, wherein the third information is used to configure an autonomous gap or discontinuous reception DRX; and
obtaining the additional information of the first broadcast service in the configured autonomous gap or DRX idle time based on the third information.

4. A communication method, wherein the method comprises:
sending first information, wherein the first information indicates that a terminal device is allowed to report information about a first broadcast service, and the first broadcast service is a broadcast service that the terminal device is interested in or is receiving in a non-serving cell; and
receiving second information, wherein the second information comprises a frequency of the broadcast service but does not comprise the additional information, and the additional information comprises a subcarrier spacing SCS and a bandwidth of the broadcast service; and/or receiving fourth information, wherein the fourth information comprises the frequency of the broadcast service and the additional information.

5. The method according to claim 4, wherein before receiving the fourth information, the method further comprises:
sending third information, wherein the third information is used to configure an autonomous gap or discontinuous reception DRX.

6. A communication method, wherein the method comprises:
when a terminal device is interested in or is receiving a broadcast service of a first frequency, receiving indication information from a network device, wherein the indication information indicates whether a first cell can provide a broadcast service for a first-type terminal device, a frequency of the first cell is the first frequency, and the first-type terminal device is a reduced capability terminal device; and
determining, based on the indication information, whether the first frequency is a high-priority frequency for cell reselection.

7. The method according to claim 6, wherein determining, based on the indication information, whether the first frequency is the high-priority frequency for cell reselection comprises:
when the first cell can provide the broadcast service for the first-type terminal device, determining that the first frequency is the high-priority frequency for cell reselection.

8. The method according to claim 7, wherein that the first cell can provide the broadcast service for the first-type terminal device comprises: a bandwidth value of a first common frequency resource CFR configured in a system information block SIB20 of the first cell does not exceed a first bandwidth value; or a second CFR is configured in the first cell, wherein the second CFR is a CFR used by the first-type terminal device, and the second CFR and the first CFR are independent of each other.

9. The method according to claim 6, wherein determining, based on the indication information, whether the first frequency is the high-priority frequency for cell reselection comprises:
when the first cell cannot provide the broadcast service for the first-type terminal device, determining that the first frequency is a low-priority frequency for cell reselection.

10. A communication method, wherein the method comprises:
sending indication information to a terminal device, wherein the indication information indicates whether a first cell can provide a broadcast service for a first-type terminal device, and the first-type terminal device is a reduced capability terminal device.

11. The method according to claim 10, wherein that the first cell can provide the broadcast service for the first-type terminal device comprises: a bandwidth value of a first common frequency resource CFR configured in a system information block SIB20 of the first cell does not exceed a first bandwidth value; or a second CFR is configured in the first cell, wherein the second CFR is a CFR used by the first-type terminal device, and the second CFR and the first CFR are independent of each other.

12. The method according to claims 6 to 11, wherein the indication information is comprised in SIB1.

13. The method according to claim 12, wherein the indication information corresponds to 1-bit information, and the 1-bit information indicates whether the first cell can provide the broadcast service for the first-type terminal device.

14. The method according to claim 12, wherein the indication information corresponds to 2-bit information, 1^{st}-bit information in the 2-bit information indicates whether SIB1 comprises the indication information, and 2^{nd}-bit information in the 2-bit information indicates whether the first cell can provide the broadcast service for the first-type terminal device.

15. A communication method, wherein the method comprises:
when a terminal device establishes a radio resource control RRC connection to a first network device or performs small data transmission SDT with the first network device, determining whether a broadcast service of interest can be received, wherein the broadcast service of interest is a broadcast service of a non-serving cell; and
when it is determined that the broadcast service of interest can be received, sending first indication information to the first network device, wherein the first indication information indicates the broadcast service of interest.

16. The method according to claim 15, wherein the method further comprises:
when it is determined that the broadcast service of interest cannot be received, skipping sending the first indication information.

17. The method according to claim 15, wherein before determining whether the broadcast service of interest can be received, the method further comprises:
sending second indication information to the first network device, wherein the second indication information indicates a first frequency of the broadcast service of interest.

18. The method according to claim 16, wherein the method further comprises:
receiving third indication information from the first network device, wherein the third indication information indicates to report the first indication information.

19. The method according to claim 18, wherein the method further comprises:
when it is determined that the broadcast service of interest cannot be received, skipping sending the first indication information in a first time period, wherein the first time period is a period of time since the third indication information is received.

20. The method according to claim 17 or 18, wherein the method further comprises:
when it is determined that the broadcast service of interest cannot be received, sending fourth indication information to the first network device, wherein the fourth indication information indicates that a broadcast service of the first frequency is no longer of interest or the first frequency is invalid.

21. The method according to any one of claims 15 to 20, wherein that the broadcast service of interest can be received comprises one or more of the following cases:
a broadcast service of the non-serving cell starts to be received or is being received;
a system information block SIB1 of the non-serving cell comprises scheduling information of SIB20 of the non-serving cell; or
the non-serving cell provides SIB20.

22. The method according to any one of claims 15 to 20, wherein that the broadcast service of interest can be received comprises one or more of the following cases:
fifth indication information is received from a second network device, wherein the fifth indication information indicates that the non-serving cell can provide a broadcast service for a first-type terminal device;
a bandwidth value of a first common frequency resource CFR configured in a system information block SIB20 of the non-serving cell does not exceed a first bandwidth value; or
a second CFR is configured in the non-serving cell, wherein the second CFR is a CFR used by the first-type terminal device, and the second CFR and the first CFR are independent of each other, wherein
the first-type terminal device is a reduced capability terminal device.

23. A communication method, wherein the method comprises:
receiving first indication information from a terminal device, wherein the first indication information indicates a broadcast service of interest that can be received by the terminal device, and the broadcast service of interest is a broadcast service of a non-serving cell.

24. The method according to claim 23, wherein before receiving the first indication information from the terminal device, the method further comprises:
receiving second indication information from the terminal device, wherein the second indication information indicates a first frequency of the broadcast service of interest.

25. The method according to claim 23, wherein after receiving the second indication information from the terminal device, the method further comprises:
sending third indication information to the terminal device, wherein the third indication information indicates to report the first indication information.

26. The method according to claim 23 or 24, wherein the method further comprises:
receiving fourth indication information from the terminal device, wherein the fourth indication information indicates that a broadcast service of the first frequency is no longer of interest or the first frequency is invalid.

27. The method according to claim 20 or 26, wherein the fourth indication information does not comprise the first frequency.

28. The method according to claim 20 or 26, wherein the fourth indication information comprises first signaling, and the first signaling indicates that the broadcast service of the first frequency is no longer of interest or the first frequency is invalid.

29. The method according to any one of claims 15 to 28, wherein the first indication information comprises one or more of the following: a frequency, a subcarrier spacing SCS, a bandwidth, and a modulation order of a broadcast service of the non-serving cell that the terminal device is interested in or is receiving.

30. A communication apparatus, wherein the communication apparatus comprises a module configured to perform the method according to any one of claims 1 to 29.

31. A communication apparatus, wherein the communication apparatus comprises a processor, and the processor is configured to enable the communication apparatus to perform the method according to any one of claims 1 to 29.

32. A computer-readable storage medium, wherein the computer-readable storage medium comprises instructions, and when the instructions are run, the method according to any one of claims 1 to 29 is implemented.

33. A computer program product, wherein the computer program product comprises instructions, and when the instructions are run, the method according to any one of claims 1 to 29 is implemented.
